Europäisches Patentamt

European Patent Office

Office européen des brevets

(11) Numéro de publication: **0 522 930 B1**

# FASCICULE DE BREVET EUROPEEN

(45) Date de publication du fascicule du brevet: **22.11.95**  (51) Int. Cl.⁶: **B64G 1/28**, G05D 1/08

(21) Numéro de dépôt: **92401876.5**

(22) Date de dépôt: **01.07.92**

(54) **Procédé et dispositif de contrôle d'attitude en roulis lacet d'un satellite à direction unique d'actionnement continu.**

(30) Priorité: **09.07.91 FR 9108593**

(43) Date de publication de la demande:
**13.01.93 Bulletin 93/02**

(45) Mention de la délivrance du brevet:
**22.11.95 Bulletin 95/47**

(84) Etats contractants désignés:
**DE ES GB IT NL SE**

(56) Documents cités:
**EP-A- 0 071 445**
**EP-A- 0 435 708**
**FR-A- 2 423 808**
**FR-A- 2 434 421**
**FR-A- 2 525 359**

(73) Titulaire: **AEROSPATIALE Société Nationale Industrielle**
**37, Boulevard de Montmorency**
**F-75781 Paris Cédex 16 (FR)**

(72) Inventeur: **Flament, Patrick**
**32, chemin des Vallons**
**F-06110 Le Cannet (FR)**

(74) Mandataire: **Rinuy, Santarelli**
**14, avenue de la Grande Armée**
**F-75017 Paris (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention concerne un dispositif pour le contrôle de l'attitude en roulis d'un satellite, généralement stationnaire, stabilisé autour de ses trois axes et ayant un moment cinétique permanent orientable.

Un satellite représente ici tout objet artificiel évoluant dans le système solaire, cet objet pouvant être :
- sur une orbite, circulaire ou non, autour de la Terre ou d'une quelconque autre planète ou objet du système solaire,
- sur une orbite solaire, éventuellement de transfert entre deux planètes.

On sait que, sur son orbite, un satellite est soumis à des couples perturbateurs dont les causes les plus importantes sont :
- la dissymétrie des effets de la pression de radiation solaire due à l'incidence de l'axe de tangage Y du satellite par rapport au soleil, aux différences de réflexivité des divers éléments du satellite et aux dissymétries géométriques du satellite,
- l'action du champ magnétique local (par exemple terrestre),
- l'influence du gradient de gravité local - par exemple terrestre - (pour les orbites basses),
- l'influence aérodynamique de l'environnement (pour les orbites basses).

Aussi, il est indispensable de prévoir des moyens pour contrôler l'attitude de ce satellite sur son orbite. On connaît notamment à cet effet, des moyens actifs qui utilisent ( cas d'un satellite stabilisé en attitude autour de trois axes) :
- plusieurs roues d'inertie et/ou à réaction,
- et/ou des tuyères à éjections de matière,
- et/ou la pression de radiation solaire (par l'orientation convenable de surfaces mobiles liées au satellite),
- et/ou le champ magnétique local, par exemple terrestre, (par la création par des boucles de courant de dipôles magnétiques à bord du satellite).

La présente invention concerne plus précisément le concept largement utilisé aujourd'hui de satellite stabilisé sur trois axes et à moment cinétique orientable (en pratique généré par des roues). Un tel satellite comprend généralement un moment cinétique dont la composante principale est orientée suivant l'axe de tangage, ce qui permet de piloter le pointage du satellite autour de cet axe par variation du moment cinétique ; en fait ce dernier doit être désaturé de temps à autre par une action extérieure. Ce moment cinétique dont la composante prépondérante est suivant l'axe de tangage a au moins une autre composante variable (composante secondaire) grâce à quoi il est orientable suivant au moins une autre direction (habituellement transversale à l'axe de tangage) pour donner une capacité de pilotage suivant au moins un autre axe transversal à l'axe de tangage. Le plus souvent le moment cinétique est orientable suivant l'axe de lacet pour permettre de piloter le pointage en roulis. Le rôle habi-tuellement dévolu à cette (ou ces) composante(s) secondaire(s) du moment cinétique est d'amortir la nutation (et éventuellement les modes souples) dont le satellite peut être animé et de piloter à court terme, comme indiqué ci-dessus, l'angle d'orientation du satellite perpendiculairement à cette composante (habituellement l'angle de roulis lorsque le moment cinétique est orientable en lacet).

De nombreux articles et brevets ont déjà proposé d'utiliser le pilotage de l'orientation du moment cinétique orientable d'un satellite pour contrôler son attitude.

On peut citer notamment :
- brevet français FR-2.525.359 : Procédé et dispositif de régulation d'attitude d'un satellite terrestre artificiel,
- brevet européen EP-0.071.445 : Electronic roll/yaw satellite control,
- brevet américain US-4.294.420 : Attitude control systems for space vehicles,
- brevet français FR-2.550.757 : Régulation de position de satellite,
- brevet allemand DE-2.537.577 : Lagerregelung fur Satelliten,
- brevet français FR-2.530.046 : Procédé et dispositif de commande d'attitude pour satellite géosynchrone,
- demande de brevet français 89-15732 : Procédé de contrôle d'attitude en roulis et en lacet d'un satellite,
- demande de brevet français 89-17479 : Dispositif de contrôle d'attitude par voiles solaires pour satellite stabilisé autour de ses trois axes,
- demande de brevet français non publiée 90-16149 : Système de contrôle d'attitude pour satellite stabilisé autour de ses trois axes,
- LACOMBE J.L. : Magnetotorquing for the attitude control of geostationnary satellite - article paru dans : Processing of AOCS conference, held in Noordwijk, the Netherlands, 3-6 october 1977, ESA SP-128,

2

November 1977, pp. 103-110,

- TSUCHIYA K., INOUE M., WAKASUQI N. and YAMAGUCHI T. : "Advanced reaction wheel controller for attitude control of spacecraft - article paru dans : Acta Astronautica, Vol.9, n° 12, 1982, pp.697-702,

- TERASAKI R.M. : Dual reaction wheel control for spacecraft pointing - article paru dans : Proceedings of the Symposium of attitude stabilisation and control of dual spin spacecraft, Aerospace Corporation, El Segundo, Calif. Aug. 1967.

Le satellite étant dans le Mode Normal de la mission, qui peut être par exemple de télécommunications ou d'observation, ou à caractère scientifique, l'objectif du système de contrôle d'attitude est d'assurer le pointage de la charge utile (antennes, instrument optique, radar, etc...) en maintenant les angles de roulis et lacet ainsi que leurs dérivées à l'intérieur de plages éventuellement variables qui leur sont assignées.

Pour ce faire, des logiques de contrôle appropriées exploitent simultanément les mesures angulaires de détecteurs, et s'il y a lieu les mesures de vitesse de la rotation des roues générant le moment cinétique, effectuées par des tachymètres et capteurs associés, dans le but de définir aussi bien les moments cinétiques (ou les vitesses) de consigne pour ces roues que les couples commandés aux autres actionneurs du satellite.

Dans ce type de contrôle d'attitude, deux boucles ou logiques de contrôle sont typiquement utilisées (cf. par exemple EP-A-0 071 445):

- une boucle rapide dont le but est de réduire les vitesses angulaires en roulis et en lacet et, de manière générale assurer le contrôle à court terme du roulis et/ou du lacet. La commande résultante en attitude peut être efectuée par les roues. Cette boucle rapide peut être de tout type connu et ne fait pas partie de la présente invention,

- une boucle lente destinée à compenser les effets sur l'attitude du satellite des couples perturbateurs externes, ce qui correspond au contrôle à long terme, et ce en commandant des couples produits par les autres actionneurs.

Parmi les types de boucles rapides connus, on peut citer à titre d'exemple celles qui sont décrites dans les articles précités de TSUCHIYA et al. ou de TERASAKI.

On connaît différents types de boucle lente, chaque type étant généralement adapté aux actionneurs et au dispositif de mesure dont le satellite est équipé. On peut citer à titre d'exemple celle qui est décrite dans l'article précité de LACOMBE.

L'invention a pour objet de conduire à un niveau élevé de performances de pointage en attitude (notamment en précision et en rapidité), au moins aussi bon qu'avec les solutions connues, tout en minimisant la masse des éléments nécessaires à ce pointage en attitude, leur coût, et leur consommation électrique, et donc en renforçant leur simplicité et leur fiabilité.

L'invention enseigne, pour ce faire, d'ajouter à la commande à court terme de l'orientation du moment cinétique, une commande à long terme adaptée à minimiser les couples demandés aux actionneurs qui sont chargés de piloter l'attitude du satellite à long terme. Ainsi par exemple, dans le cas où ces actionneurs sont de type magnétique, et où la composante variable (ou secondaire) du moment cinétique est d'orientation fixe, leur nombre peut être réduit à un au lieu de deux (à performances de pointage équivalentes), cet actionneur magnétique étant implanté en sorte de générer un couple de même direction que la composante secondaire du moment cinétique. Cette bobine magnétique est utilisée pour assurer deux fonctions : non seulement piloter l'attitude du satellite à long terme en roulis mais aussi asservir la composante secondaire du moment cinétique à une valeur telle que la rotation du satellite sur son orbite permette de piloter à long terme l'angle de lacet.

Il est rappelé que sur un satellite, la rotation orbitale provoque un échange entre les axes de roulis et lacet.

Ainsi par exemple, un moment cinétique en lacet se transforme au bout d'un quart d'orbite en un moment cinétique en roulis (en l'absence de perturbation et de contrôle). En raisonnant en un point de l'orbite, on peut dire que la présence d'un moment cinétique en lacet provoque une variation de moment cinétique en roulis qui est physiquement équivalent à un couple en roulis. L'invention propose d'utiliser ce couple pour le pilotage de l'orientation du satellite.

L'invention conduit donc bien, à performances égales, à une minimisation du coût, de la masse et de la consommation électrique du système de contrôle d'attitude.

Ainsi que cela a été indiqué, de nombreux articles et fascicules de brevet ont proposé d'utiliser le pilotage de l'orientation du moment cinétique d'un satellite pour contrôler son attitude à court terme ; mais à la connaissance de l'inventeur, la seule référence qui envisage d'ajouter à la commande de l'orientation du moment cinétique par la boucle rapide une commande par la boucle lente est la demande de brevet français 89-15732 du même inventeur. Cependant, il s'agit dans ce cas de stocker provisoirement, dans le moment cinétique, un écart dans le couple de contrôle qui est dû à une insuffisance de l'actionneur continu utilisé. Aucun auteur n'a donc encore proposé de piloter l'orientation du moment cinétique en vue de réduire volontairement l'amplitude des couples demandés aux actionneurs continus.

Au contraire, l'invention s'est heurtée au préjugé très vivace de l'homme de métier, qui consiste à ne pas vouloir mélanger sur un quelconque actionneur les commandes à court et long termes.

Plus précisément, l'invention propose un procédé de contrôle de l'attitude en roulis et en lacet d'un satellite, stabilisé autour de ses axes de roulis, lacet et tangage et comportant un système à roues générant un moment cinétique permanent sensiblement parallèle à l'axe de tangage et ayant une composante variable au moins approximativement parallèle au plan roulis-lacet et un système d'actionnement à action continue, selon lequel on détecte l'attitude du satellite en roulis et/ou en lacet, on applique au système à roues des signaux de commande élaborés par une boucle rapide d'asservissement selon une loi d'asservissement rapide connue et on applique au système d'actionnement à action continue des seconds signaux de commande élaborés par une boucle lente d'asservissement selon une loi d'asservissement lent connue, caractérisé en ce que ce système d'actionnement à action continue est sollicité dans une direction fixe du satellite, parallèle à cette composante variable si celle-ci est de direction fixe, en ce que. l'on applique en outre au système à roues au moins un premier signal complémentaire de commande ($T_w$) choisi en sorte d'amener la composante du moment cinétique selon cette direction fixe vers une valeur propre à compenser à long terme la dérive du moment cinétique selon une seconde direction fixe, et en ce que l'on applique au système d'actionnement à action continue un second signal complémentaire de commande, adapté à annuler l'effet du premier signal sur l'attitude selon cette seconde direction fixe.

Selon des dispositions préférées de ce procédé, éventuellement combinées :
- la première direction fixe est parallèle à l'axe de lacet, et la seconde direction fixe est parallèle à l'axe de roulis,
- cette composante variable du moment cinétique est en permanence exclusivement parallèle à cette première direction fixe.
- la composante variable du moment cinétique a une direction variable dans le plan roulis/lacet,
- le système d'actionnement à action continue est magnétique, interagissant avec le champ magnétique local,
- le satellite est sur une orbite géosynchrone d'inclinaison inférieur à 10°,
- cette orbite est géostationnaire.
- ce premier signal complémentaire de commande est adapté à faire générer par le système à roues un couple de la forme :

$$T_w = (H_c - H_m) \cdot K_w$$

où
$H_m$      est la valeur instantanée mesurée de cette composante en lacet,
$K_w$      est une fonction de transfert éventuellement réduite à un gain,
$H_c$      est la valeur de consigne de la composante en lacet propre à compenser à long terme la dérive en roulis du moment cinétique, avec :

$$H_c = \frac{T_{xc}}{\omega_0}$$

où
$T_{xc} =$      couple de contrôle demandé en roulis par une boucle lente classique
$\omega_0 =$      vitesse locale de rotation orbitale
Selon des applications préférées de l'invention :
- dans un premier cas, la première direction fixe est parallèle à l'axe de lacet, et la seconde direction fixe est parallèle à l'axe de roulis, et en ce que ces premier et second signaux complémentaires de commande sont adaptés à faire générer par le système à roues et par le système d'actionnement à action continue, des couples de la forme :

$$\left\{ \begin{array}{l} T_W = (-H_{ym} * \Psi * K_{mx} - \dfrac{TD_x}{\omega_0} - H_{zm}) * K_w \qquad (7) \\[4mm] T_{zc} = K_{mz} * \omega_0 * H_{ym} * \Phi - TD_z + T_w \qquad (8) \\[2mm] T_w \text{ étant choisi de façon que } |T_{zc}| < T_{disp} \end{array} \right.$$

où :

$T_{disp} =$ couple maximal que l'actionneur peut fournir autour de Z (cette valeur est ici supposée égale dans les deux sens)

$T_{zc} =$ couple de contrôle commandé à l'actionneur autour de Z

$H_{ym}, H_{zm} =$ composantes mesurées suivant Y et Z du moment cinétique des roues

$T_w =$ couple commandé à la composante suivant Z du moment cinétique des roues

$\Phi =$ angle de roulis mesuré

$\Psi =$ angle de lacet mesuré

$\omega_0 =$ vitesse angulaire locale de rotation orbitale

$TD_x, TD_z =$ couples perturbateurs estimés autour de X et Z

$K_{mx}, K_{mz}, K_w =$ fonctions de transfert éventuellement réduites à des gains.

- dans un deuxième cas, la première direction fixe est parallèle à l'axe de lacet, et la seconde direction fixe est parallèle à l'axe de roulis, et en ce que ces premier et second signaux complémentaires de commande sont adaptés à faire générer par le système à roues et par le système d'actionnement à action continue, des couples de la forme :

$$\left\{ \begin{array}{l} T_W = - (K_{mz} * H_{ym} * \Phi + \dfrac{H_{zm} - H_{zr}}{\omega_0}) * \sin\alpha_w * K_w \qquad (9) \\[4mm] T_{zc} = (K_{mz} * \omega_0 * H_{ym} * \Phi + H_{zm} - H_{zr}) * \cos\alpha_w + T_w \qquad (10) \\[2mm] H_{zr} = \int T_w * dt \qquad (11) \\[2mm] T_w \text{ étant choisi de façon que } |T_{zc}| < T_{disp} \end{array} \right.$$

où :

$\alpha_w =$ angle de WHECON compris entre 5° et 85°

$T_{disp} =$ couple maximal que l'actionneur peut fournir autour de X

$T_{zc} =$ couple de contrôle commandé à l'actionneur autour de X

$H_{ym}, H_{zm} =$ composantes mesurées suivant axe Y et Z du moment cinétique des roues

$T_w =$ couple commandé à la composante suivant Z du moment cinétique des roues

$\Phi =$ angle de roulis mesuré

$\Psi =$ angle de lacet mesuré

$\omega_0 =$ vitesse angulaire locale de rotation orbitale

$TD_x, TD_z =$ couples perturbateurs estimé autour de X et Z.

$K_{mz}, K_{wz} =$ fonction de transfert éventuellement réduite à des gains.

- dans un troisième cas, la première direction fixe est parallèle à l'axe de lacet, et la seconde direction fixe est parallèle à l'axe de roulis, et en ce que ces premier et second signaux complémentaires de commande sont adaptés à faire générer par le système à roues et par le système d'actionnement à action continue, des couples de la forme :

$$\begin{cases} T_{wx} = \omega_0 \, * \, (K_{mx} \, * \, H_{ym} \, * \, \Psi \, + \, H_{zm}) \, + \, TD_x & (12) \\[2em] T_{wz} = (\, - \, \dfrac{TD_x}{\omega_0} \, - \, H_{zm} \, ) \, * \, K_{wz} & (13) \\[1em] T_{zc} = \omega_0 \, * \, (K_{mz} \, * \, H_{ym} \, * \, \Phi \, + \, H_{xm}) \, - \, TD_z \, + \, T_{wz} & (14) \\[0.5em] T_{wz} \; \text{étant choisi de façon que } |T_{zc}| < T_{disp} \end{cases}$$

où :

$T_{disp}$ = couple maximal que l'actionneur peut fournir

$T_{zc}$ = couple de contrôle commandé à l'actionneur

$H_{xm}, H_{ym}, H_{zm}$ = composantes mesurées suivant X, Y et Z du moment cinétique des roues

$T_{wx}, T_{wz}$ = couple commandé aux composantes suivant X et Y du moment cinétique des roues

$\Phi$ = angle de roulis mesuré

$\Psi$ = angle de lacet mesuré

$\omega_0$ = vitesse angulaire locale de rotation orbitale

$TD_x, TD_z$ = couples perturbateurs estimés autour de X et Z

$K_{mx}, K_{mz}, K_{wz}$ = fonction du tranfert éventuellement réduite à des gains.

L'invention propose également un dispositif de contrôle d'attitude en roulis/lacet d'un satellite stabilisé autour de ses axes de roulis et de lacet et comportant un système à roues générant un moment cinétique permanent sensiblement parallèle à l'axe de tangage et ayant une composante variable au moins approximativement parallèle au plan roulis-lacet et un système d'actionnement à action continue, comportant un ensemble de détecteurs pour détecter l'attitude du satellite en roulis ou en lacet, des premiers moyens pour appliquer au système à roues des signaux de commande élaborés par une boucle rapide d'asservissement selon une loi d'asservissement rapide connue et des moyens pour appliquer au système d'actionnement à action continue des seconds signaux de commande élaborés par une boucle lente d'asservissement selon une loi d'asservissement lent connue, ce système d'actionnement à action continue est actif selon une direction fixe du satellite, parallèle à cette composante variable si celle-ci est de direction fixe, et en ce que la boucle lente d'asservissement est connectée à l'ensemble à roues à travers la boucle rapide d'asservissement, et applique à ce système à roues au moins un signal complémentaire de commande choisi en sorte d'amener la composante du moment cinétique selon cette direction fixe vers une valeur propre à compenser à long terme la dérive du moment cinétique selon une seconde direction fixe, et en ce que ces seconds moyens appliquent en outre au système d'actionnement à action continue un second signal complémentaire de commande adapté à annuler l'effet du premier signal sur le satellite selon cette seconde direction fixe.

Selon des dispositions préférées de ce dispositif :

- la première direction fixe est parallèle à l'axe de lacet, et la seconde direction fixe est parallèle à l'axe de roulis,
- cette composante variable du moment cinétique est en permanence exclusivement parallèle à cette première direction fixe,
- ce système à roues comporte une roue cinétique d'axe au moins approximativement parallèle à l'axe de tangage et une roue de réaction d'axe parallèle à cette première direction fixe,
- ce système à roues comporte deux roues cinétiques disposées en V d'axes disposés dans le plan de l'axe de tangage et de cette première direction fixe, de façon au moins approximativement symétrique par rapport à l'axe de tangage,
- ce système à roues comporte une roue cinétique montée sur un pivot somple à axe perpendiculaire à cette première direction fixe.
- la composante variable du moment cinétique a une direction variable dans le plan roulis/lacet,
- ce système à roues comporte une roue cinétique dont l'axe est monté sur double pivot,
- le système d'actionnement à action continue est magnétique, interagissant avec le champ magnétique local,
- le satellite est sur une orbite géosynchrone d'inclinaison inférieur à 10°,
- cette orbite est géostationnaire.

- ce premier signal complémentaire de commande est adapté à faire générer par le système à roues un couple de la forme :

$$T_w = (H_c - H_m) \cdot K_w$$

où

$H_m$ est la valeur instantanée mesurée de cette composante en lacet,

$K_w$ est une fonction de transfert éventuellement réduite à un gain,

$H_c$ est la valeur de consigne de la composante en lacet propre à compenser à long terme la dérive en roulis du moment cinétique, avec

$$H_c = \frac{Txc}{\omega_0}$$

où

$T_{xc} =$ couple de contrôle demandé en roulis par une boucle lente classique

$\omega_0 =$ vitesse angulaire locale de rotation orbitale

Dans des applications préférées de l'invention :

- dans un premier cas, la première direction fixe est parallèle à l'axe de lacet, et la seconde direction fixe est parallèle à l'axe de roulis et en ce que ces premier et second signaux complémentaires de commande sont adaptés à faire générer par le système à roues et par le système d'actionnement à action continue, des couples de la forme :

$$\begin{cases} T_w = (-H_{ym} * \Psi * K_{mx} - \dfrac{TD_x}{\omega_0} - H_{zm}) * K_w & (7) \\[4mm] T_{zc} = K_{mz} * \omega_0 * H_{ym} * \Phi - TD_z + T_w & (8) \\[2mm] T_w \text{ étant choisi de façon que } |T_{zc}| < T_{disp} \end{cases}$$

où :

$T_{disp} =$ couple maximal que l'actionneur peut fournir autour de Z (cette valeur est ici supposée égale dans les deux sens)

$T_{zc} =$ couple de contrôle commandé à l'actionneur autour de Z

$H_{ym}, H_{zm} =$ composantes mesurées suivant Y et Z du moment cinétique des roues

$T_w =$ couple commandé à la composante suivant Z du moment cinétique des roues

$\Phi =$ angle de roulis mesuré

$\Psi =$ angle de lacet mesuré

$\omega_0 =$ vitesse angulaire locale de rotation orbitale

$TD_x, TD_z =$ couples perturbateurs estimés autour de X et Z

$K_{mx}, K_{mz}, K_w =$ fonctions de transfert éventuellement réduites à des gains.

- dans un deuxième cas, la première direction fixe est parallèle à l'axe de lacet, et la seconde direction fixe est parallèle à l'axe de roulis et en ce que ces premier et second signaux complémentaires de commande sont adaptés à faire générer par le système à roues et par le système d'actionnement à action continue, des couples de la forme :

$$\begin{cases} Tw = -(K_{mz} * H_{ym} * \Phi + \dfrac{H_{zm} - H_{zr}}{\omega_0}) * \sin\alpha_w * K_w \quad (9) \\[2mm] T_{zc} = (K_{mz} * \omega_0 * H_{ym} * \Phi + H_{zm} - H_{zr}) * \cos\alpha_w + T_w \quad (10) \\[2mm] H_{zr} = \int T_w * dt \hspace{4cm} (11) \\[2mm] T_w \text{ étant choisi de façon que } |T_{zc}| < T_{disp} \end{cases}$$

où :

| | | |
|---|---|---|
| $\alpha_w =$ | | angle de WHECON compris entre 5° et 85° |
| $T_{disp} =$ | | couple maximal que l'actionneur peut fournir autour de X |
| $T_{zc} =$ | | couple de contrôle commandé à l'actionneur autour de X |
| $H_{ym}, H_{zm} =$ | | composantes mesurées suivant axe Y et Z du moment cinétique des roues |
| $T_w =$ | | couple commandé à la composante suivant Z du moment cinétique des roues |
| $\Phi =$ | | angle de roulis mesuré |
| $\Psi =$ | | angle de lacet mesuré |
| $\omega_0 =$ | | vitesse angulaire locale de rotation orbitale |
| $TD_x, TD_z =$ | | couples perturbateurs estimé autour de X et Z. |
| $K_{mz}, K_{wz} =$ | | fonctions de tranfert éventuellement réduites à des gains. |

- dans un troisième cas, la première direction fixe est parallèle à l'axe de lacet, et la seconde direction fixe est parallèle à l'axe de roulis, et en ce que ces premier et second signaux complémentaires de commande sont adaptés à faire générer par le système à roues et par le système d'actionnement à action continue, des couples de la forme :

$$\begin{cases} T_{wx} = \omega_0 * (K_{mx} * H_{ym} * \Psi + H_{zm}) + TD_x \hspace{2cm} (12) \\[2mm] T_{wz} = (- \dfrac{TD_x}{\omega_0} - H_{zm}) * K_{wz} \hspace{3cm} (13) \\[2mm] T_{zc} = \omega_0 * (K_{mz} * H_{ym} * \Phi + H_{xm}) - TD_z + T_{wz} \hspace{1cm} (14) \\[2mm] T_{wz} \text{ étant choisi de façon que } |T_{zc}| < T_{disp} \end{cases}$$

où :

| | | |
|---|---|---|
| $T_{disp} =$ | | couple maximal que l'actionneur peut fournir |
| $T_{zc} =$ | | couple de contrôle commandé à l'actionneur |
| $H_{xm}, H_{ym}, H_{zm} =$ | | composantes mesurées suivant X, Y et Z du moment cinétique des roues |
| $T_{wx}, T_{wz} =$ | | couple commandé aux composantes suivant X et Y du moment cinétique des roues |
| $\Phi =$ | | angle de roulis mesuré |
| $\Psi =$ | | angle de lacet mesuré |
| $\omega_0 =$ | | vitesse angulaire locale de rotation orbitale |
| $TD_x, TD_z =$ | | couples perturbateurs estimés autour de X et Z |
| $K_{mx}, K_{mz}, K_{wz} =$ | | fonctions de transfert éventuellement réduites à des gains. |

Des objets, caractéristiques et avantages de l'invention ressortent de la description qui suit, donnée à titre d'exemple non limitatif, en regard des dessins annexés sur lesquels :

- la figure 1 est une vue schématique dans l'espace d'un véhicule spatial stabilisé autour de ses trois axes en train de décrire une orbite autour de la Terre,
- les figures 2, 3 et 4 montrent des dispositions de roues couramment utilisées pour obtenir un moment cinétique suivant l'axe de tangage dont une autre composante (ici en lacet) est commandable en amplitude (orientation fixe par rapport au satellite),
- les figures 5 et 6 montrent des dispositions de roues couramment utilisées pour obtenir un moment cinétique suivant l'axe de tangage dont deux autres composantes, ici roulis et lacet, sont commandables,

- la figure 7 est un organigramme simplifié du contrôle roulis/lacet d'un satellite utilisant l'invention,
- la figure 7A est un organigramme simplifié résumant les étapes classiques du contrôle roulis/lacet à partir d'une boucle lente classique,
- la figure 7B est un organigramme simplifié résumant les étapes du contrôle roulis-lacet proposé par l'invention (voir la figure 7) à partir de la boucle lente classique de la figure 7A,
- la figure 8 est une vue schématique en perspective d'un satellite à moment cinétique orientable en lacet et à actionneur magnétique actif selon cet axe de lacet actif selon cet axe de lacet,
- la figure 9 est un schéma synoptique du dispositif de contrôle d'attitude que comporte le satellite de la figure 8,
- la figure 10 est une vue schématique en perspective d'un satellite similaire à celui de la figure 8, mais dépourvu de détecteur stellaire,
- la figure 11 est un schéma synoptique du dispositif de contrôle d'attitude que comporte le satellite de la figure 10,
- la figure 12 est une vue schématique en perspective d'un satellite similaire à celui de la figure 8, mais à moment cinétique orientable selon les axes de roulis et de lacet, et
- la figure 13 est un schéma synoptique du dispositif de contrôle d'attitude que comporte le satellite de la figure 12.

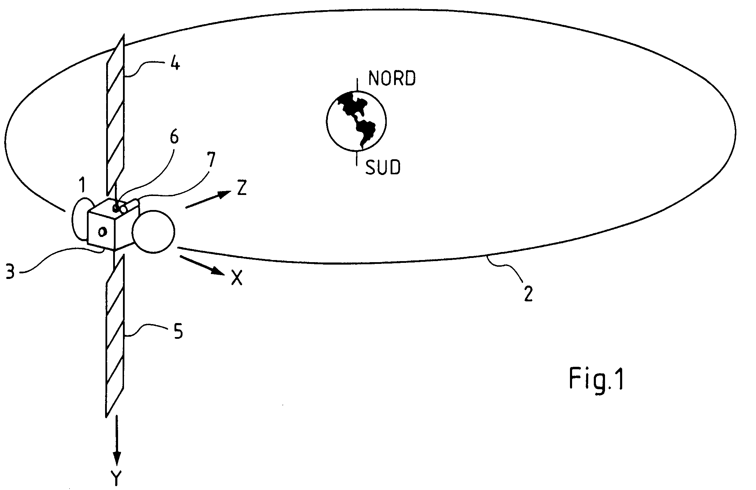

La figure 1 représente un satellite repéré 1 dans son ensemble, en train de décrire une orbite 2 circulaire autour de la terre.

Ce satellite comporte un corps central (ou caisse, ici sensiblement cubique) 3 auquel sont associés trois axes définissant un trièdre de référence direct lié au satellite :

- un axe X tangent à l'orbite 2 et de même sens que la vitesse de parcours de l'orbite ; il est classiquement appelé axe de roulis,
- un axe Y perpendiculaire au plan de l'orbite 2 et orienté dans le sens Nord-Sud de la Terre : il est classiquement appelé axe de tangage,
- un axe Z perpendiculaires aux axes X et Y et orienté vers la Terre : il est classiquement appelé axe de lacet.

Sur certains satellites, ce système d'axe peut être orienté différemment par rapport à l'orbite et/ou la Terre en fonction des impératifs liés à la mission.

Ce satellite comporte un dispositif de contrôle de l'attitude (voir plus loin) grâce auquel il est stabilisé autour de ses trois axes.

Ce satellite comporte un dispositif classique de mesure de l'attitude dont les signaux de sortie sont traités, de façon classique, pour permettre de calculer les corrections d'attitude qui doivent être appliquées au satellite. Ce dispositif comprend en général un détecteur terrestre 7 (par exemple de type infrarouges) adapté le plus souvent à mesurer l'attitude en roulis et en tangage. Il peut également comprendre des détecteurs solaires, voire stellaires, pointés vers l'Etoile Polaire par exemple, pour mesurer si nécessaire, notamment l'attitude en lacet. Le reste du dispositif de contrôle d'attitude, classique en soi, n'est pas représenté sur cette figure 1 pour des raisons de lisibilité.

Ce satellite comprend éventuellement deux ailes 4 et 5 de générateur solaire orientées à l'aide des moteurs 3 et 6 qui peuvent, dans certains cas, être utilisés en tant qu'actionneurs du contrôle d'attitude. En variante non représentée, le satellite comprend une source interne d'énergie, par exemple nucléaire, auquel cas le générateur peut être supprimé. Dans d'autres cas encore, une seule aile de générateur peut suffire.

Le satellite comprend également divers autres équipements classiques (antennes ...) et actionneurs (tuyères ...) qui, n'intervenant pas directement dans l'invention, ne sont pas détaillés ici.

Le satellite dispose d'un système générateur de moment cinétique, de tout type connu approprié, dont la composante dominante est parallèle à l'axe de tangage et dont au moins une autre composante est commandable en amplitude dans le repère de référence du satellite.

On entend par système générateur de moment cinétique, un ensemble d'éléments du satellite mis en rotation à l'aide de moteurs dont la vitesse est commandable. Ces éléments sont par la suite appelés roues cinétiques si le moment résultant est toujours de même signe, roues de réaction si le moment résultant est de signe quelconque. L'élément appelé roue peut éventuellement être une partie du satellite ayant d'autres fonctions que la génération d'un moment cinétique (dans le cas par exemple d'un satellite en deux parties en rotation relative, en anglais : dual-spin).

La génération d'un moment cinétique orientable à un degré de liberté selon l'axe de lacet peut se faire, par exemple :

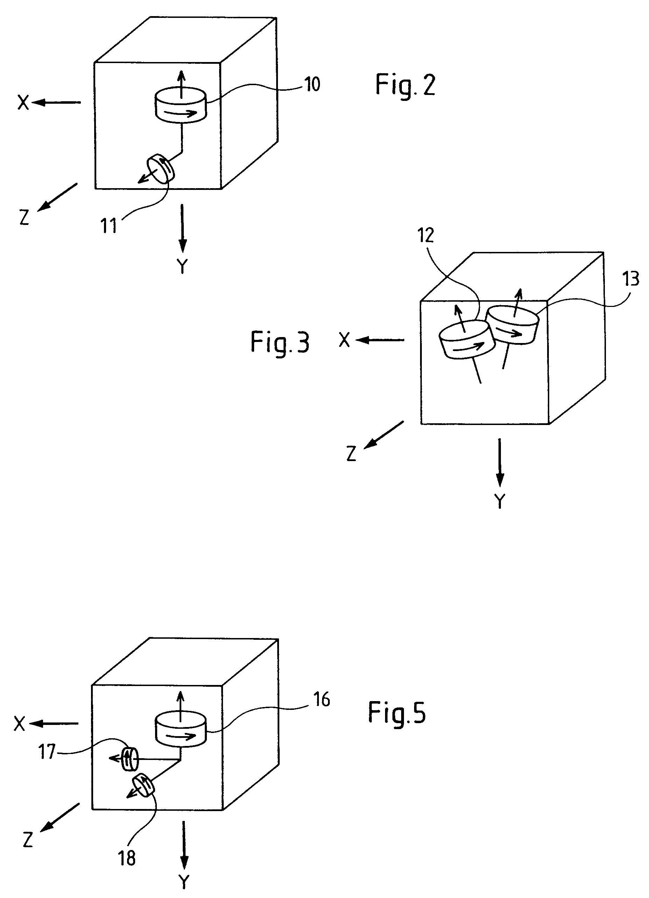

- grâce à une roue cinétique 10 d'axe au moins approximativement parallèle à l'axe de tangage et une roue de réaction 11 orientée suivant l'axe de lacet (voir figure 2),

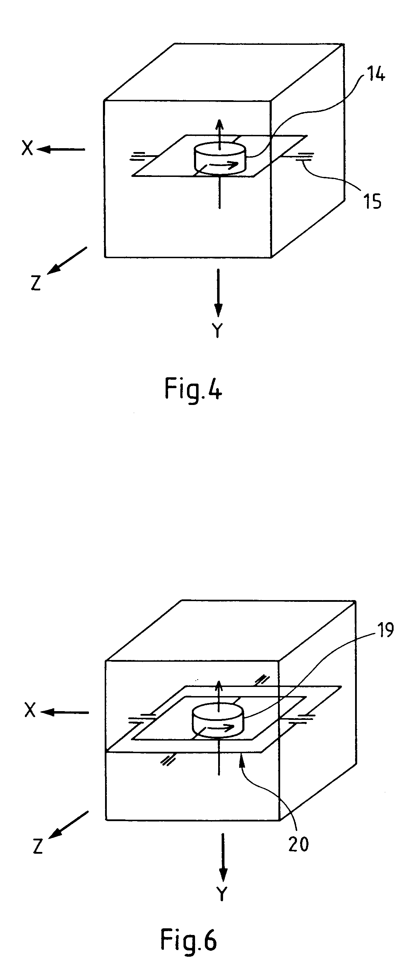

- ou avec deux roues cinétiques en V 12 et 13 dont les axes sont disposés symétriquement de part et d'autre de l'axe de tangage (voir figure 3), dans le plan des axes de tangage et de lacet,
- ou au moyen d'une seule roue cinétique 14 montée sur pivot 1-axe 15 parallèle à l'axe de roulis (voir figure 4).

La génération d'un moment cinétique orientable à deux degrés de liberté peut se faire, par exemple :

- grâce à une roue cinétique 16 orientée en tangage et deux roues de réaction 17 et 18 dans le plan roulis/lacet, ici orientées selon les axes de roulis et de lacet, respectivement (voir figure 5),
- au moyen d'une seule roue cinétique 19 dont l'axe est monté sur un double pivot 20 dans le plan roulis/lacet (voir figure 6).

Le satellite est également équipé d'au moins un actionneur continu propre à générer des couples suivant une direction proche du plan roulis/lacet et au moins approximativement parallèle à la composante secondaire du moment cinétique, si celle-ci est unique.

Cet actionneur continu peut être, par exemple :

- du type bobine magnétique, à noyau ou non,
- du type utilisant la pression de radiation solaire sur des surfaces liées au satellite.

L'originalité de l'invention réside dans l'idée, inexploitée à ce jour, de superposer à la commande à court terme de l'orientation du moment cinétique, une commande à long terme dont le but est d'asservir l'orien-tation du moment cinétique de façon qu'elle diminue, voire supprime, le couple demandé aux actionneurs continus autres que les roues.

Il est rappelé que sur un satellite, la rotation orbitale provoque un échange entre les axes de roulis et lacet.

Ainsi par exemple, un moment cinétique en lacet se transforme au bout d'un quart d'orbite en un moment cinétique en roulis (en l'absence de perturbation et de contrôle). En raisonnant en un point de l'orbite, on peut dire que la présence d'un moment cinétique en lacet provoque une variation de moment cinétique en roulis qui est physiquement équivalent à un couple en roulis. L'invention propose d'utiliser ce couple pour le pilotage de l'orientation du satellite.

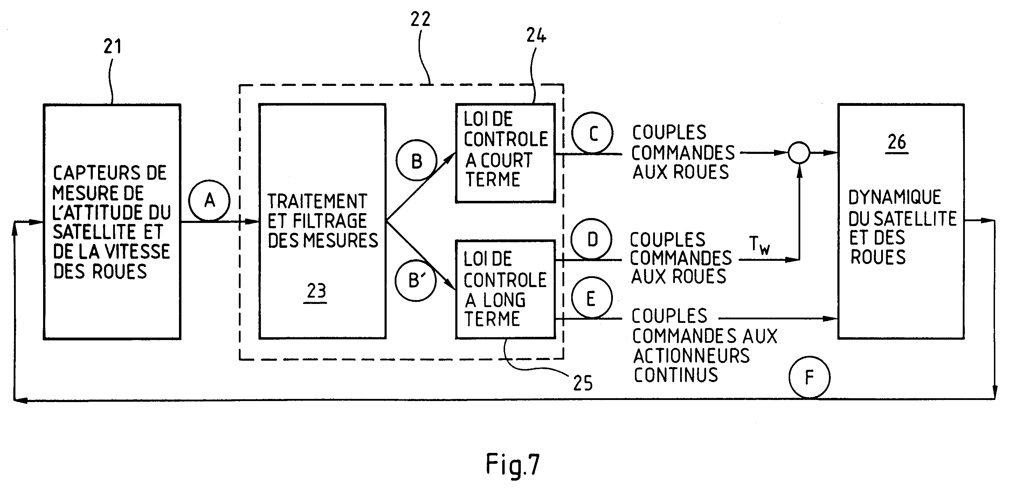

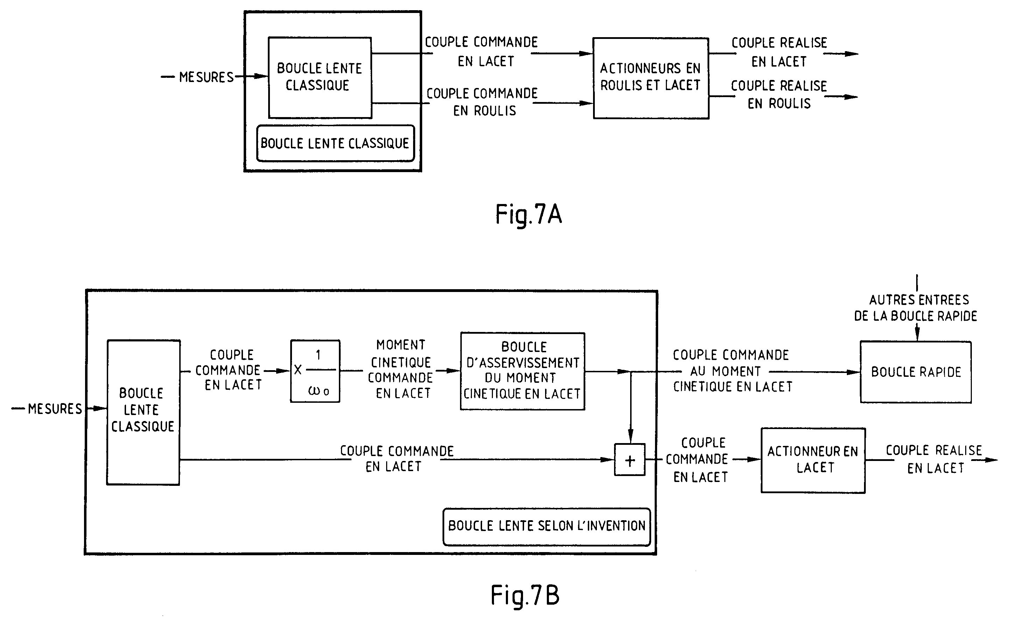

Ceci est schématisé à la figure 7, où le bloc 21 représente l'ensemble des capteurs dont le contrôle d'attitude est muni pour détecter l'orientation du corps 3, la vitesse des roues, et éventuellement les vitesses angulaires de la caisse autour de ses axes. Les informations de ces capteurs, représentées par la flèche A sont transmises à un calculateur noté 22 qui les traite (ce traitement peut comporter, par exemple, un étage de traitement et de filtrage 23, de tout type connu approprié, pour éliminer le bruit de mesure et/ou faire une estimation des couples perturbateurs, une estimation des vitesses de rotation du satellite et/ou une estimation des erreurs d'attitude qui n'ont pas été mesurées). Ces données après traitement, notées B et B', sont transmises à :

- une logique de contrôle à court terme notée 24 et connue en soi, chargée de calculer des couples de contrôle notés C, a générer par les roues, qui ont pour but d'amortir la nutation (et éventuellement les modes souples) dont le satellite peut être animé et de piloter l'attitude à court terme du satellite (en roulis dans le cas d'un moment cinétique orientable suivant Z) ;
- une logique de contrôle à long terme notée 25 chargée de calculer :
  . selon l'invention, des couples de contrôle notés D à générer par les roues (même si les actionneurs de la boucle 3 sont différents), qui ont pour but d'orienter le moment cinétique du satellite suivant les principes de l'invention. Ces couples seront ajoutés à ceux générés par la logique de contrôle à court terme C, et
  . des couples de contrôle notés E à générer par les autres actionneurs continus du satellite dont le but est de piloter l'attitude à long terme du satellite et de compenser les couples D qui seront générés par les roues pour le pilotage à long terme du moment cinétique.

Ces couples sont ensuite appliqués au satellite qui réagit suivant les lois connues de la dynamique ce qui vient modifier son attitude. Ceci est représenté par le bloc 26 en traits mixtes. La flèche F représente l'attitude et la vitesse angulaires du satellite résultants et qui seront mesurés par les capteurs du bloc 21.

La suite de la description expose comment l'invention réalise le contrôle actif du mouvement en roulis et lacet d'un satellite stabilisé trois axes par des roues et au moins un autre actionneur de type connu (magnétique dans les exemples considérés ici). La commande du mouvement en tangage, ne faisant pas partie de cette invention ne sera pas détaillée ; elle est par exemple réalisée à l'aide de la (ou les) roue(s) cinétique(s) et des actionneurs de désaturation connus tels que des tuyères ou tout autre moyen connu.

Les équations à long terme (scalaires) du comportement du satellite (sans les accélérations qui sont traitées par la boucle rapide) peuvent être linéarisées aux petits angles du mouvement roulis/lacet du satellite (les termes négligeables ont été omis) :

$$\overset{\circ}{H}_x - (I_x * \omega_0 + H_y) * \overset{\circ}{\Psi} - \omega_0 * H_z = T_{xc} + TD_x \qquad\qquad (1)$$

$$\overset{\circ}{H}_z + (I_z * \omega_0 + H_y) * \overset{\circ}{\Phi} + \omega_0 * H_x = T_{zc} + TD_z \qquad\qquad (2)$$

où :

$I_x, I_z$ = moments principaux d'inertie du satellite autour des axes X et Z

$T_{xc}, T_{zc}$ = couples de contrôle appliqués par les actionneurs continus autour de X et Z

$H_x, H_y, H_z$ = composantes suivant X, Y ou Z du moment cinétique des roues

$\overset{\circ}{H}_x, \overset{\circ}{H}_z$ = dérivées des composantes de vitesses suivant X et Z du moment cinétique des roues

$\Phi, \overset{\circ}{\Phi}$ = angle et vitesse de roulis

$\Psi, \overset{\circ}{\Psi}$ = angle et vitesse de lacet

$\omega_0$ = vitesse angulaire locale de rotation orbitale

$TD_x, TD_z$ = couples perturbateurs appliqués autour de X et Z.

La commande du moment cinétique selon l'invention se fait par l'application aux roues de couples de commande Tw qui s'ajoutent aux couples commandés par la boucle rapide, ces couples de commande étant compensés par des couples opposés commandés aux actionneurs continus. En effet, si l'on étudie les équations (1) et (2) du mouvement roulis/lacet du satellite, on constate que :

- une action sur $H_z$, prise en compte par le terme $\omega_0 * Hz$, se comporte comme un couple de commande $T_{xc}$
- de même, le terme $\omega_0 * H_x$ se comporte comme un couple de commande $T_{zc}$
- donc en agissant sur $H_z$ on peut minimiser $T_{xc}$ ou en agissant sur $H_x$ on peut minimiser $T_{zc}$
- à l'inverse, les termes $\overset{\circ}{H}_x$ et $\overset{\circ}{H}_z$ peuvent être compensés par des couples de commande $T_{xc}$ et $T_{zc}$ respectivement.

On peut donc par exemple se dispenser d'appliquer l'un des couples commandés $T_{xc}$ par exemple, et donc de supprimer l'actionneur associé, si l'on choisit l'autre couple commandé $T_{zc}$ en sorte d'amener le terme $\omega_0 * H_z$ à une valeur telle que la boucle de contrôle conclut pour l'axe X au besoin d'appliquer un couple $T_{xc}$ de valeur nulle.

Le reste de la structure de la boucle lente (c'est-à-dire les lois de détermination des couples à commander selon chaque axe) peut être de tout type connu, ce qui permet d'implanter la présente invention à tout satellite muni d'un moment cinétique orientable. Cette implantation peut même se faire sur les satellites déjà en orbite par téléchargement d'un logiciel de bord modifié ou par commande depuis le sol (par exemple sur un satellite à deux directions d'actionnement continu dont l'une viendrait à être en panne).

La loi de commande des composantes secondaires du moment cinétique peut, selon l'invention, être par exemple pour chaque axe actif choisi du type :

$$T_w = \overset{\circ}{H} = (H_c - H_m) * K_w$$

$T_w$ étant éventuellement réduit en sorte d'être ramené à l'intérieur du domaine $[T_c - T_{disp}, T_{disp} - T_c]$ pour éviter que le couple commandé à l'actionneur continu associé à cet axe dépasse sa capacité, où :

$T_w$ = couple commandé au moteur des roues autour de l'axe considéré

$T_{disp}$ = couple maximal que l'actionneur continu peut fournir autour de l'axe considéré

$T_c$ = couple commandé à l'actionneur continu autour de l'axe considéré, tel que déterminé par les lois classiques choisies, pour supprimer la nécessité de l' "autre" couple commandé,

$H_c, H_m$ = composantes commandées (voir ci-dessus) et mesurées du moment cinétique des roues autour de l'axe considéré

$K_w$ = fonction de transfert (éventuellement réduite à un gain) choisie au préalable pour avoir une réponse suffisamment rapide de l'asservissement, mais pas trop faible pour ne pas trop saturer l'actionneur continu chargé de s'opposer à ce couple

$\overset{\circ}{H}$ = dérivée de la composante du moment cinétique des roues autour de l'axe considéré.

Les figures 7A et 7B permettent de bien visualiser l'apport de l'invention.

Traditionnellement, la boucle lente génère des couples à appliquer à la fois en roulis et en lacet. L'invention propose de ne pas appliquer le couple en roulis, par exemple en le remplaçant par un moment cinétique en lacet équivalent. Le principe de pilotage en roulis est donc remplacé par un asservissement du moment cinétique en lacet à la valeur :

11

$$H_c = \frac{T_{xc}}{\omega_0}$$

où

$T_{xc}$ = couple de contrôle demandé en roulis par une boucle lente classique

$\omega_0$ = vitesse locale de rotation orbitale

Hc = valeur de consigne pour le moment cinétique en lacet.

Les couples à appliquer aux roues ayant été définis ainsi en axes liés au satellite, il ne reste plus qu'à les projeter (de manière connue) sur les axes des roues et/ou de leur pivot pour en déduire les signaux de commande à appliquer directement aux moteurs des roues, en fonction de la nature et de la disposition de ces roues.

En pratique, les logiques définissant ces boucles sont implantées à bord du satellite à l'aide, par exemple, d'un calculateur utilisant, entre autres, des gains et des facteurs d'échelle constants ou variables programmés dans un bloc-mémoire associé. Une autre utilisation possible serait de traiter les mesures des senseurs et de commander les actionneurs depuis le sol.

Comme cela a déjà été dit, l'invention réside dans le fait que, à notre connaissance, elle est la première à proposer pour les satellites stabilisés 3-axes, un procédé qui permet de tirer parti des composantes secondaires du moment cinétique pour piloter l'attitude du satellite à long terme. L'invention permet, par cette technique, à performance de pointage égale, de réduire par rapport aux solutions connues le nombre d'actionneurs implantés à bord, leur masse et leur couple que ceux-ci doivent générer. L'invention est particulièrement bien adaptée, avec un satellite à moment cinétique orientable, aux exigences de pointage des futurs satellites de télécommunications optiques ou de télévision directe de seconde génération.

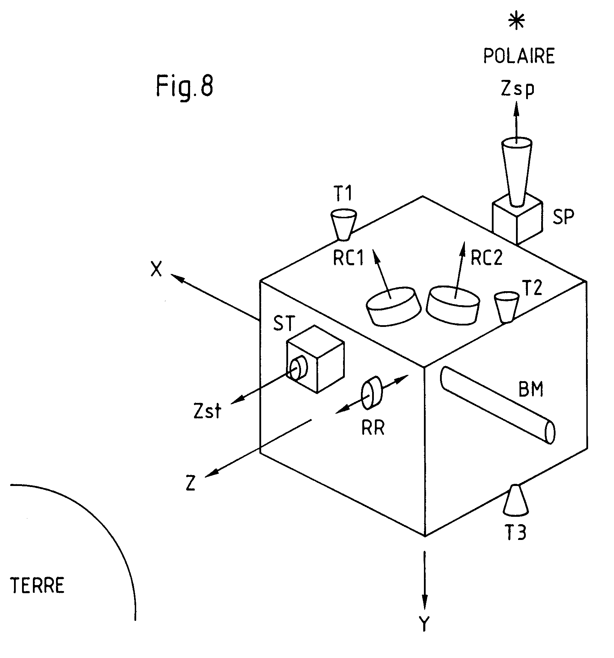

Les figures 8 à 13 décrivent divers cas possibles d'application de l'invention.

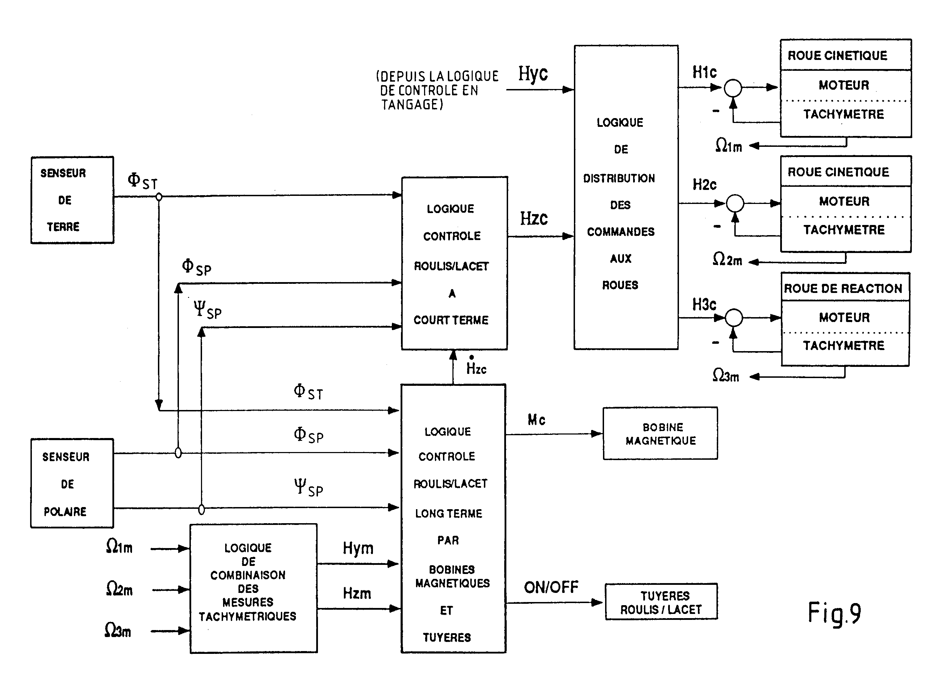

Dans une première application (figures 8 et 9), le satellite est muni d'un moment cinétique orientable suivant seulement l'axe de lacet, et d'un dispositif de pilotage magnétique propre à générer des couples de contrôle suivant le même axe. Les angles de roulis et de tangage sont mesurés par le détecteur de Terre noté ST, tandis que le détecteur d'étoile polaire, noté SP, mesure les angles de roulis et lacet. Le satellite est également muni de tuyères dont trois notées T1, T2 et T3 sont représentées. Ces tuyères nécessaires aux autres modes du contrôle d'attitude seront utilisées en secours en cas de fort orage magnétique perturbant le champ magnétique au point de rendre la bobine inopérante. Le moment cinétique orientable est obtenu par deux roues cinétiques, notées RC, disposées en "V". Une roue de réaction, notée RR, permet de pallier la panne éventuelle d'une roue cinétique. La bobine magnétique, notée BM, est orientée suivant X, et permet donc de produire des couples de contrôle suivant Z.

Cette disposition représentée sur la figure 8 permet, par l'application de la présente invention, d'effectuer un pilotage continu suivant les deux axes roulis/lacet et d'atteindre des performances élevées de pointage (identiques à celles de la demande de brevet français non publiée 90.169149 qui dispose de deux bobines). L'avantage de l'invention se situe ici dans le fait qu'elle ne nécessite qu'une seule bobine au lieu de deux pour les solutions connues, soit une réduction dans un rapport environ 2 de la masse et de la consommation des actionneurs.

La logique de contrôle est représenté par l'organigramme de la figure 9.

Les mesures du roulis et du lacet par le senseur de polaire notées $\Phi_{sp}$ et $\Psi_{sp}$ et la mesure du roulis notée $\Phi_{st}$ par le senseur de terre sont transmises aux logiques de contrôle à court et long termes. Les mesures des vitesses de roues par les tachymètres notées $\Omega_{1m}$, $\Omega_{2m}$ et $\Omega_{3m}$ sont combinées (par une logique de combinaison des mesures tachymétriques repérée X qui calcule les moments cinétiques mesurés autour de Y et Z (notées $H_{ym}$ et $H_{zm}$) qui sont transmis à la logique de contrôle à long terme qui détermine et commande :

- le dipôle magnétique noté $M_c$ que devra générer la bobine pour fournir le couple $T_{zc}$ voulu,
- éventuellement l'ouverture des tuyères (en cas d'orage magnétique)
- le couple à long terme que les roues doivent fournir, noté $\overset{\circ}{H}_{zc}$ ou $T_w$, et qui est communiqué à la logique à court terme.

La logique à court terme détermine la commande du moment cinétique autour de Z notée $H_{zc}$ (générée par la logique de contrôle en tangage). Cela permet de calculer les moments cinétiques commandés, notés $H_{1c}$ $H_{2c}$ $H_{3c}$, aux trois roues. Ces commandes seront réalisées à l'aide de la boucle d'asservissement de chaque roue qui fait intervenir un moteur et un tachymètre pour chaque roue.

Les lois de contrôle à long terme, pour les roues d'une part, et pour l'actionneur continu d'autre part, sont par exemple de la forme :

$$
\left\{
\begin{array}{l}
\text{Tw} = (-H_{ym} * \Psi * K_{mx} - \dfrac{TD_x}{\omega_0} - H_{zm}) * K_w \qquad (7) \\[2ex]
T_{zc} = K_{mz} * \omega_0 * H_{ym} * \Phi - TD_z + T_w \qquad (8) \\[1ex]
T_w \text{ étant choisi de façon que } |T_{zc}| < T_{disp}
\end{array}
\right.
$$

où :

| | |
|---|---|
| $T_{disp}$ = | couple maximal que l'actionneur peut fournir autour de Z (cette valeur est ici supposée égale dans les deux sens) |
| $T_{zc}$ = | couple de contrôle commandé à l'actionneur autour de Z |
| $H_{ym}, H_{zm}$ = | composantes mesurées suivant Y et Z du moment cinétique des roues |
| $T_w$ = | couple commandé à la composante suivant Z du moment cinétique des roues |
| $\Phi$ = | angle de roulis mesuré |
| $\Psi$ = | angle de lacet mesuré |
| $\omega_0$ = | vitesse angulaire locale de rotation orbitale |
| $TD_x, TD_z$ = | couples perturbateurs estimés autour de X et Z |
| $K_{mx}, K_{mz}, K_w$ = | fonctions de transfert éventuellement réduites à des gains. |

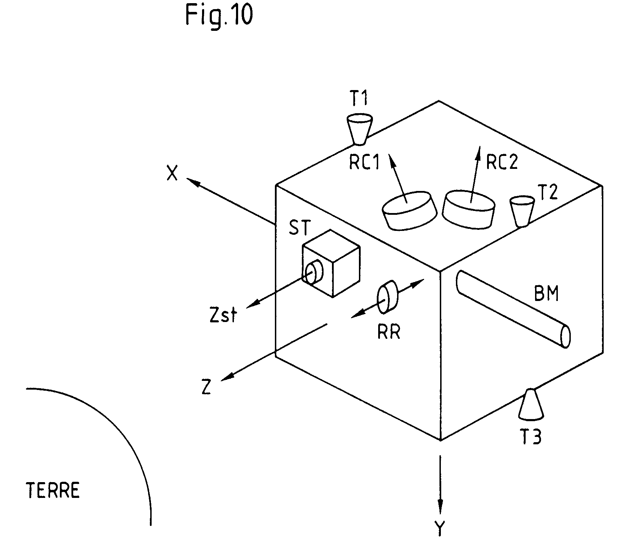

Dans une deuxième application, la configuration du satellite représentée par la figure 10 est identique au cas précédent à ceci près que le senseur de polaire a été supprimé. L'application de l'invention permet des performances équivalentes à celles du système décrit dans l'article précité de LACOMBE, qui présente une méthode de conception d'un système de contrôle magnétique du roulis/lacet pour satellite géosynchrone stabilisé 3-axes par deux roues en V et propose de générer le dipôle magnétique à bord selon une loi qui s'inspire du contrôle type WHECON classiquement utilisé avec les tuyères sur les satellites actuels comme ECS, TDF/TVSAT, EUTELSAT. Pour ce faire, l'axe de la bobine est décalé par rapport à l'axe de lacet d'un angle a proche de 45° alors que le module du dipôle magnétique est défini en fonction de l'angle de roulis mesuré par un senseur terrestre.

L'avantage de la présente invention est alors que le dipôle nécessaire est dans ce cas réduit de 25 % environ par rapport au système de LACOMBE, d'où un gain dans le même rapport de la masse et de la consommation de la bobine. Par ailleurs, l'installation de la bobine dans le satellite sera plus facile à cause de son orientation suivant un axe géométrique du satellite au lieu d'être à 45° dans le système de LACOMBE. Enfin, l'angle de WHECON $\alpha_w$ est, dans le cas de l'invention, remplacé par un paramètre purement numérique qui pourra être optimisé au cours du temps en fonction des couples perturbateurs prédits ou même mesurés en vol, alors qu'il est fixé une fois pour toutes par l'orientation de la bobine chez LACOMBE.

L'application de l'invention permet également des performances équivalentes à celles du dispositif décrit dans le brevet précité EP-0.071.445 qui propose un dispositif dans lequel une bobine magnétique permet de générer un couple autour de X, orthogonal à la composante secondaire du moment cinétique qui est selon Z. Par rapport au brevet EP-0.071.445, la présente invention a pour avantage de piloter en permanence la composante secondaire du moment cinétique qui restera en permanence dans une plage limitée au contraire du brevet EP-0.071.445 dans lequel la composante Z du moment cinétique est pilotée passivement par couplage orbital et qui est amené à diverger si un couple perturbateur constant autour de Z est appliqué au satellite. Une telle divergence amènera à utiliser les tuyères pour diminuer le moment cinétique en Z, d'où une consommation d'ergol donc une pénalité en masse supplémentaire.

Il est rappelé ici que, à cause de la rotation orbitale, une erreur de pointage en lacet se transforme (en l'absence de perturbation et de contrôle) en une erreur de pointage en roulis. Ainsi, sur de nombreux satellite, le lacet n'est pas mesuré directement par un capteur approprié et le contrôle en lacet se fait passivement grâce à la mesure du roulis qui contient, pour partie, l'effet des erreurs de pointage en lacet. Ce principe est largement utilisé et est appelé WHECON (abréviation de l'anglais WHEel CONtrol qui signifie contrôle grâce aux roues, c'est-à-dire au moment cinétique en tangage). Ceci revient à appliquer au satellite des couples en roulis et lacet dans un rapport de proportionnalité. La tangente de ce rapport est appelé angle de WHECON et correspond physiquement à l'orientation du couple des actionneurs chargé du contrôle roulis/lacet. La deuxième application indiquée ici propose donc une loi de contrôle inspiré du principe de WHECON à la différence près que l'angle de WHECON devient un paramètre sans signification physique et adaptable si nécessaire.

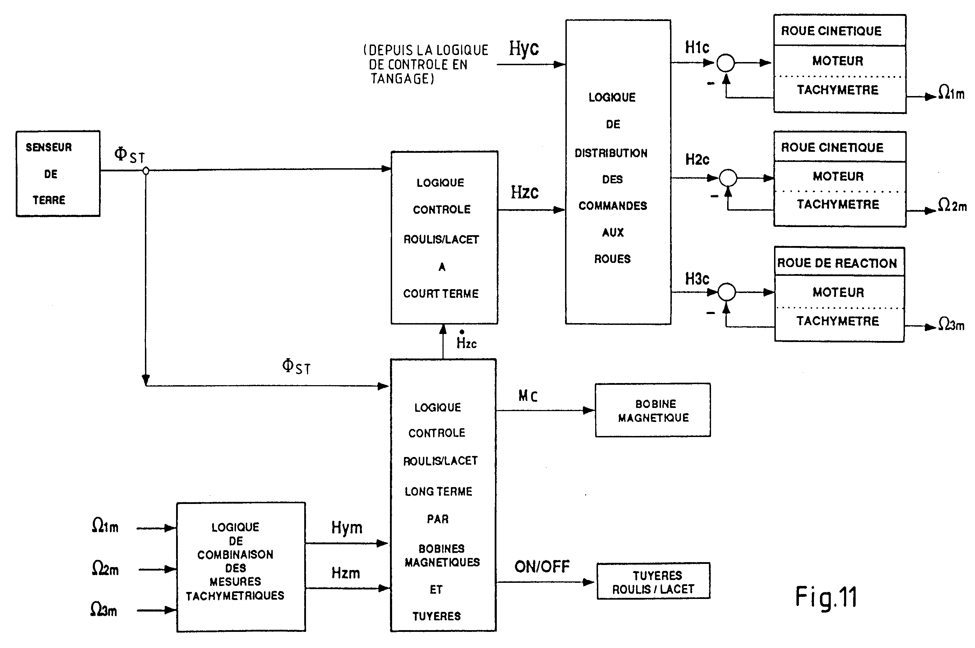

La logique de contrôle, représentée par l'organigramme de la figure 11, est semblable à celle du cas précédent. La différence réside dans les lois de contrôles à long terme qui ne nécessitent pas de mesure du lacet.

Les lois de contrôle sont par exemple de la forme :

$$
\begin{cases}
T_w = - (K_{mz} * H_{ym} * \Phi + \dfrac{H_{zm} - H_{zr}}{\omega_0}) * \sin\alpha_w * K_w \quad (9) \\[3mm]
T_{zc} = (K_{mz} * \omega_0 * H_{ym} * \Phi + H_{zm} - H_{zr}) * \cos\alpha_w + T_w \quad (10) \\[2mm]
H_{zr} = \int T_w * dt \quad\quad\quad\quad\quad\quad\quad\quad\quad\quad\quad (11) \\[2mm]
T_w \text{ étant choisi de façon que } |T_{zc}| < T_{disp}
\end{cases}
$$

où :

| | | |
|---|---|---|
| $\alpha_w$ = | | angle de WHECON compris entre 5° et 85° |
| $T_{disp}$ = | | couple maximal que l'actionneur peut fournir autour de X |
| $T_{zc}$ = | | couple de contrôle commandé à l'actionneur autour de X |
| $H_{ym}, H_{zm}$ = | | composantes mesurées suivant axe Y et Z du moment cinétique des roues |
| $T_w$ = | | couple commandé à la composante suivant Z du moment cinétique des roues |
| $\Phi$ = | | angle de roulis mesuré |
| $\Psi$ = | | angle de lacet mesuré |
| $\omega_0$ = | | vitesse angulaire locale de rotation orbitale |
| $TD_x, TD_z$ = | | couples perturbateurs estimé autour de X et Z. |
| $K_{mz}, K_{wz}$ = | | fonctions de transfert éventuellement réduites à des gains. |

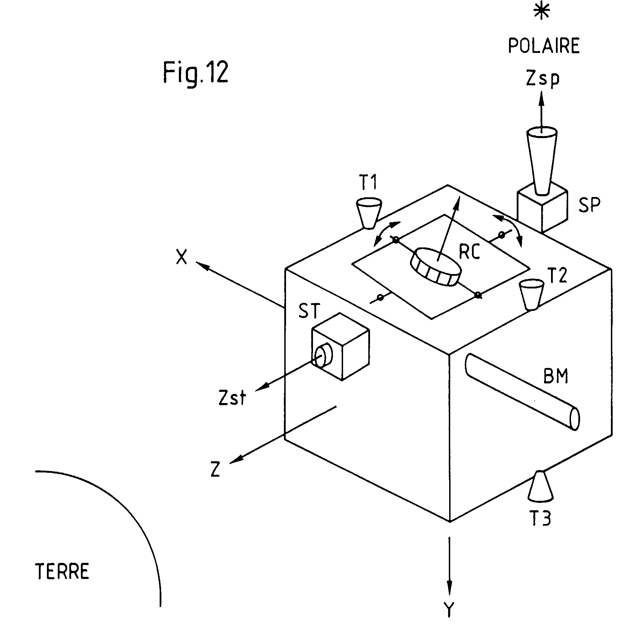

Dans une troisième application, la configuration du satellite représentée par la figure 12 est identique à la première application (figure 8) à ceci près que le moment cinétique est orientable suivant deux axes. Ce moment cinétique est obtenu grâce à une roue dont l'axe est monté sur un double pivot.

Cette disposition représentée sur la figure 12 permet, par l'application de la présente invention, d'effectuer un pilotage continu suivant les deux axes roulis/lacet et d'atteindre des performances de pointage identiques à celles d'un satellite qui disposerait de deux bobines générant des couples autour de X et Z.

L'avantage de l'invention se situe dans ce cas dans le fait qu'elle ne nécessite qu'une seule bobine au lieu de deux, soit une réduction dans un rapport 2 de la masse et de la consommations des actionneurs (ce rapport peut éventuellement être légèrement inférieur à 2 car le dipôle nécessaire de la bobine peut être légèrement supérieur).

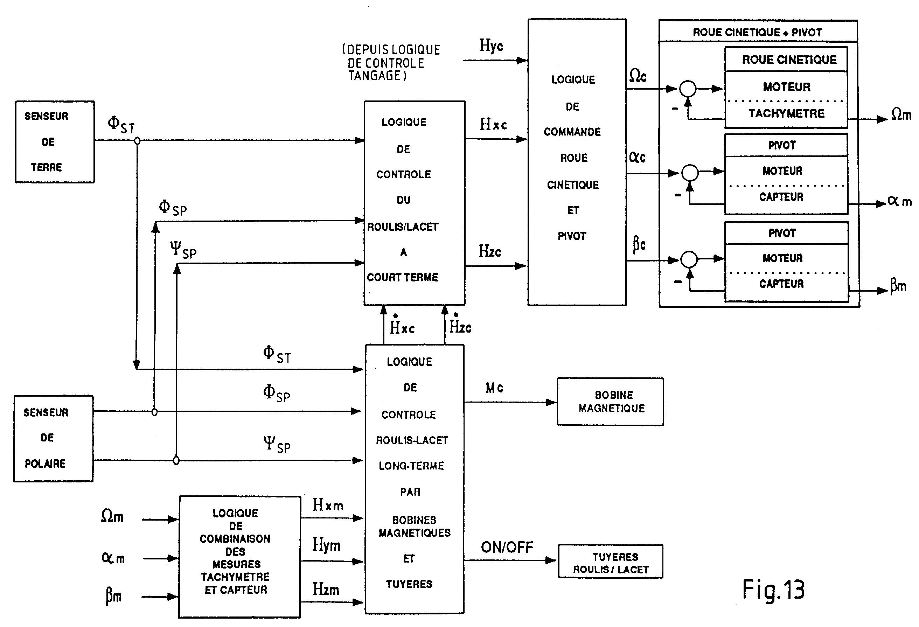

La logique de contrôle, représentée par l'organigramme de la figure 13 est semblable à celle de la première application. La différence réside :
- dans la roue et la réalisation des moments cinétiques par la vitesse de la roue et des angles d'inclinaison des pivots,
- dans le fait que la loi de contrôle à court terme génère également un moment cinétique commandé autour de X noté $H_{xc}$,
- dans le fait que la loi de contrôle à long terme génère également un couple demandé aux roues autour de X noté $H_{xc}$ ou $T_{wx}$.

Les lois de contrôle peuvent être dans ce cas de la forme :

$$
\begin{cases}
T_{wx} = \omega_0 * (K_{mx} * H_{ym} * \Psi + H_{zm}) + TD_x \quad (12) \\[3mm]
T_{wz} = ( - \dfrac{TD_x}{\omega_0} - H_{zm} ) * K_{wz} \quad\quad\quad\quad (13) \\[3mm]
T_{zc} = \omega_0 * (K_{mz} * H_{ym} * \Phi + H_{xm}) - TD_z + T_{wz} \quad (14) \\[2mm]
T_{wz} \text{ étant choisi de façon que } |T_{zc}| < T_{disp}
\end{cases}
$$

où :

$T_{disp}$ =  couple maximal que l'actionneur peut fournir

$T_{zc}$ =  couple de contrôle commandé à l'actionneur

$H_{xm}, H_{ym}, H_{zm}$ =  composantes mesurées suivant X, Y et Z du moment cinétique des roues

$T_{wx}, T_{wz}$ =  couple commandé aux composantes suivant X et Z du moment cinétique des roues

$\Phi$ =  angle de roulis mesuré

$\Psi$ =  angle de lacet mesuré

$\omega_0$ =  vitesse angulaire locale de rotation orbitale

$TD_x, TD_z$ =  couples perturbateurs estimés autour de X et Z

$K_{mx}, K_{mz}, K_{wz}$ =  fonctions de transfert éventuellement réduites à des gains.

Il va de soi que la description qui précède n'a été proposée qu'à titre d'exemple non limitatif et que de nombreuses variantes peuvent être proposées par l'homme de l'art sans sortir du cadre de l'invention.

Ainsi, les axes d'orientation des roues et des actionneurs peuvent être disposés suivant d'autres axes que les roulis et lacet, ce qui modifie la forme des lois de contrôle sans en modifier le principe.

Les détecteurs de mesure peuvent être remplacés par tout autre capteur ou combinaison de détecteurs donnant des informations équivalentes ; par exemple la mesure de lacet peut être déduite de la mesure d'un détecteur d'étoile visant une autre étoile que la polaire (par exemple CANOPUS) ou un détecteur solaire.

D'autre part, on pourra envisager d'autres actionneurs continus que magnétiques, par exemple :

- de type à éjection de matière ou de photons,
- de type aérodynamique,
- de type utilisant le gradient de gravité local (par exemple terrestre).

## Revendications

1. Procédé de contrôle de l'attitude en roulis et en lacet d'un satellite (1), stabilisé autour de ses axes de roulis (X-X), lacet (Z-Z) et tangage (Y-Y) et comportant un système à roues (10-20 ; RC1, RC2; RR, RC)générant un moment cinétique permanent sensiblement parallèle à l'axe de tangage et ayant une composante variable au moins approximativement parallèle au plan roulis-lacet et un système d'actionnement à action continue (BM), selon lequel on détecte (21) l'attitude du satellite en roulis et/ou en lacet, on applique au système à roues des signaux de commande élaborés par une boucle rapide d'asservissement selon une loi d'asservissement rapide connue (24) et on applique au système d'actionnement à action continue des seconds signaux de commande élaborés par une boucle lente d'asservissement selon une loi d'asservissement lent connue (25), caractérisé en ce que ce système d'actionnement à action continue (BM) est sollicité dans une direction fixe du satellite (Z-Z), parallèle à cette composante variable si celle-ci est de direction fixe, en ce que l'on applique en outre au système à roues au moins un premier signal complémentaire de commande ($T_w$) choisi en sorte d'amener la composante du moment cinétique selon cette direction fixe vers une valeur propre à compenser à long terme la dérive du moment cinétique selon une seconde direction fixe (X-X), et en ce que l'on applique au système d'actionnement à action continue un second signal complémentaire de commande, adapté à annuler l'effet du premier signal sur l'attitude selon cette seconde direction fixe.

2. Procédé selon la revendication 1, caractérisé en ce que la première direction fixe (Z-Z) est parallèle à l'axe de lacet, et la seconde direction fixe (X-X) est parallèle à l'axe de roulis.

3. Procédé selon la revendication 1 ou la revendication 2, caractérisé en ce que ce premier signal complémentaire de commande est adapté à faire générer par le système à roues un couple de la forme :

$$T_w = (H_c - H_m) . K_w$$

où

$H_m$  est la valeur instantanée mesurée de cette composante en lacet,

$K_w$  est une fonction de transfert éventuellement réduite à un gain,

$H_c$  est la valeur de consigne de la composante en lacet propre à compenser à long terme la dérive en roulis du moment cinétique, avec

$$H_c = \frac{Txc}{\omega_0}$$

où

$T_{xc}$ = couple de contrôle demandé en roulis par une boucle lente classique

$\omega_0$ = vitesse locale de rotation orbitale

4. Procédé selon l'une quelconque des revendications 1 à 3, caractérisé en ce que cette composante variable du moment cinétique est en permanence exclusivement parallèle à cette première direction fixe (Z-Z)

5. Procédé selon la revendication 4, caractérisé en ce que la première direction fixe est parallèle à l'axe de lacet, et la seconde direction fixe est parallèle à l'axe de roulis, et en ce que ces premier et second signaux complémentaires de commande sont adaptés à faire générer par le système à roues et par le système d'actionnement à action continue, des couples de la forme :

$$\begin{cases} Tw = (-H_{ym} * \Psi * K_{mx} - \frac{TD_x}{\omega_0} - H_{zm}) * K_w \qquad (7) \\[2em] T_{zc} = K_{mz} * \omega_0 * H_{ym} * \Phi - TD_z + T_w \qquad (8) \\[1em] T_w \text{ étant choisi de façon que } |T_{zc}| < T_{disp} \end{cases}$$

où :

$T_{disp}$ = couple maximal que l'actionneur peut fournir autour de Z (cette valeur est ici supposée égale dans les deux sens)

$T_{zc}$ = couple de contrôle commandé à l'actionneur autour de Z

$H_{ym}, H_{zm}$ = composantes mesurées suivant Y et Z du moment cinétique des roues

$T_w$ = couple commandé à la composante suivant Z du moment cinétique des roues

$\Phi$ = angle de roulis mesuré

$\Psi$ = angle de lacet mesuré

$\omega_0$ = vitesse angulaire locale de rotation orbitale

$TD_x, TD_z$ = couples perturbateurs estimés autour de X et Z

$K_{mx}, K_{mz}, K_w$ = fonctions de transfert éventuellement réduite à des gains.

6. Procédé selon la revendication 4, caractérisé en ce que ce la première direction fixe est parallèle à l'axe de lacet, et la seconde direction fixe est parallèle à l'axe de roulis, et en ce que ces premier et second signaux complémentaires de commande sont adaptés à faire générer par le système à roues et par le système d'actionnement à action continue, des couples de la forme :

$$\begin{cases} Tw = - (K_{mz} * H_{ym} * \Phi + \frac{H_{zm} - H_{zr}}{\omega_0}) * \sin\alpha_w * K_w \qquad (9) \\[2em] T_{zc} = (K_{mz} * \omega_0 * H_{ym} * \Phi + H_{zm} - H_{zr}) * \cos\alpha_w + T_w \qquad (10) \\[1em] H_{zr} = \int T_w * dt \qquad (11) \\[1em] T_w \text{ étant choisi de façon que } |T_{zc}| < T_{disp} \end{cases}$$

où :

$\alpha_w$ = paramètre numérique compris entre 5° et 85°

$T_{disp}$ = couple maximal que l'actionneur peut fournir autour de X

$T_{zc}$ = couple de contrôle commandé à l'actionneur autour de X

$H_{ym}, H_{zm}$ = composantes mesurées suivant axe Y et Z du moment cinétique des roues
$T_w$ = couple commandé à la composante suivant Z du moment cinétique des roues
$\Phi$ = angle de roulis mesuré
$\Psi$ = angle de lacet mesuré
$\omega_0$ = vitesse angulaire locale de rotation orbitale
$TD_x, TD_z$ = couples perturbateurs estimé autour de X et Z.
$K_{mz}, K_{wz}$ = fonction de transfert éventuellement réduite à des gains.

**7.** Procédé selon l'une quelconque des revendications 1 à 3, caractérisé en ce que la composante variable du moment cinétique a une direction variable dans le plan roulis/lacet.

**8.** Procédé selon la revendication 7, caractérisé en ce que la première direction fixe est parallèle à l'axe de lacet, et la seconde direction fixe est parallèle à l'axe de roulis, et en ce que ces premier et second signaux complémentaires de commande sont adaptés à faire générer par le système à roues et par le système d'actionnement à action continue, des couples de la forme :

$$
\begin{cases}
T_{wx} = \omega_0 \ * \ (K_{mx} \ * \ H_{ym} \ * \ \Psi \ + \ H_{zm}) \ + \ TD_x & (12) \\[2em]
T_{wz} = ( \ - \ \dfrac{TD_x}{\omega_0} \ - \ H_{zm} \ ) \ * \ K_{wz} & (13) \\[2em]
T_{zc} = \omega_0 \ * \ (K_{mz} \ * \ H_{ym} \ * \ \Phi \ + \ H_{xm}) \ - \ TD_z \ + \ T_{wz} & (14) \\[1em]
T_{wz} \ \text{étant choisi de façon que } |T_{zc}| \ < \ T_{disp}
\end{cases}
$$

où :
$T_{disp}$ = couple maximal que l'actionneur peut fournir
$T_{zc}$ = couple de contrôle commandé à l'actionneur
$H_{xm}, H_{ym}, H_{zm}$ = composantes mesurées suivant X, Y et Z du moment cinétique des roues
$T_{wx}, T_{wz}$ = couple commandé aux composantes suivant X et Z du moment cinétique des roues
$\Phi$ = angle de roulis mesuré
$\Psi$ = angle de lacet mesuré
$\omega_0$ = vitesse angulaire locale de rotation orbitale
$TD_x, TD_z$ = couples perturbateurs estimés autour de X et Z
$K_{mx}, K_{mz}, K_{wz}$ = fonction du transfert éventuellement réduite à des gains.

**9.** Procédé selon l'une quelconque des revendications 1 à 8, caractérisé en ce que le système d'actionnement à action continue est magnétique, interagissant avec le champ magnétique local.

**10.** Procédé selon l'une quelconque des revendications 1 à 9, caractérisé en ce que le satellite est sur une orbite géosynchrone d'inclinaison inférieur à 10°.

**11.** Procédé selon la revendication 10, caractérisé en ce que cette orbite est géostationnaire.

**12.** Dispositif de contrôle d'attitude en roulis/lacet d'un satellite (1) stabilisé autour de ses axes de roulis (X-X), lacet (Z-Z) et tangage (Y-Y) et comportant un système à roues (10-20 ; RC1, RC2, RR, RC) générant un moment cinétique permanent sensiblement parallèle à l'axe de tangage et ayant une composante variable au moins approximativement parallèle au plan roulis-lacet et un système d'actionnement à action continue (BM), comportant un ensemble de détecteurs (21) pour détecter l'attitude du satellite en roulis ou en lacet, des premiers moyens (24) pour appliquer au système à roues des signaux de commande élaborés par une boucle rapide d'asservissement selon une loi d'asservissement rapide connue et des moyens pour appliquer au système d'actionnement à action continue des seconds signaux de commande élaborés par une boucle lente d'asservissement selon une loi d'asservissement lent connue, caractérisé en ce que ce système d'actionnement à action continue est actif selon une direction fixe (Z-Z) du satellite, parallèle à cette composante variable si celle-ci est de direction fixe, en ce que la boucle lente (25) d'asservissement est connectée (D) à l'ensemble à roues à travers la boucle rapide d'asservissement, et applique à ce système à roues au moins un signal complémentaire de commande choisi en sorte d'amener la composante du moment cinétique selon cette direction fixe vers une valeur propre à compenser à long terme la dérive du moment cinétique selon une seconde direction fixe (X-X), et en ce que ces seconds moyens (25) appliquent en outre au système d'actionnement à action continue un second signal complémentaire de commande adapté à annuler l'effet du premier signal sur le satellite selon cette seconde direction fixe.

**13.** Dispositif selon la revendication 12, caractérisé en ce que la première direction fixe (Z-Z) est parallèle à l'axe de lacet, et la seconde direction fixe (X-X) est parallèle à l'axe de roulis.

**14.** Dispositif selon la revendication 12 ou la revendication 13, caractérisé en ce que ce premier signal complémentaire de commande est adapté à faire générer par le système à roues un couple de la forme :

$$T_w = (H_c - H_m) \cdot K_w$$

où

$H_m$     est la valeur instantanée mesurée de cette composante en lacet,

$K_w$     est une fonction de transfert éventuellement réduite à un gain,

$H_c$     est la valeur de consigne de la composante en lacet propre à compenser à long terme la dérive en roulis du moment cinétique, avec

$$H_c = \frac{T_{xc}}{\omega_0}$$

où

$T_{xc} =$     couple de contrôle demandé en roulis par une boucle lente classique

$\omega_0 =$     vitesse locale de rotation orbitale

**15.** Dispositif selon l'une quelconque des revendications 12 à 14, caractérisé en ce que cette composante variable du moment cinétique est en permanence exclusivement parallèle à cette première direction fixe.

**16.** Dispositif selon la revendication 15, caractérisé en ce que ce système à roues comporte une roue cinétique (10) d'axe au moins approximativement parallèle à l'axe de tangage et une roue de réaction (11) d'axe parallèle à cette première direction fixe.

**17.** Dispositif selon la revendication 15, caractérisé en ce que ce système à roues comporte deux roues cinétiques (12, 13, RC1, RC2) disposées en V d'axes disposés dans le plan de l'axe de tangage et de cette première direction fixe, de façon au moins approximativement symétrique par rapport à l'axe de tangage.

**18.** Dispositif selon la revendication 15, caractérisé en ce que ce système à roues comporte une roue cinétique (14) montée sur un pivot simple (15) à axe perpendiculaire à cette première direction fixe.

**19.** Dispositif selon la revendication 15, caractérisé en ce que la première direction fixe est parallèle à l'axe de lacet, et la seconde direction fixe est parallèle à l'axe de roulis et en ce que ces premier et second signaux complémentaires de commande sont adaptés à faire générer par le système à roues et par le système d'actionnement à action continue, des couples de la forme :

$$T_w = (-H_{ym} * \Psi * K_{mx} - \frac{TD_x}{\omega_0} - H_{zm}) * K_w \qquad (7)$$

$$T_{zc} = K_{mz} * \omega_0 * H_{ym} * \Phi - TD_z + T_w \qquad (8)$$

$T_w$ étant choisi de façon que $|T_{zc}| < T_{disp}$

où :

| | |
|---|---|
| $T_{disp} =$ | couple maximal que l'actionneur peut fournir autour de Z (cette valeur est ici supposée égale dans les deux sens) |
| $T_{zc} =$ | couple de contrôle commandé à l'actionneur autour de Z |
| $H_{ym}, H_{zm} =$ | composantes mesurées suivant Y et Z du moment cinétique des roues |
| $T_w =$ | couple commandé à la composante suivant Z du moment cinétique des roues |
| $\Phi =$ | angle de roulis mesuré |
| $\Psi =$ | angle de lacet mesuré |
| $\omega_0 =$ | vitesse angulaire locale de rotation orbitale |
| $TD_x, TD_z =$ | couples perturbateurs estimés autour de X et Z |
| $K_{mx}, K_{mz}, K_w =$ | fonctions de transfert éventuellement réduites à des gains. |

**20.** Dispositif selon la revendication 15, caractérisé en ce que la première direction fixe est parallèle à l'axe de lacet, et la seconde direction fixe est parallèle à l'axe de roulis et en ce que ces premier et second signaux complémentaires de commande sont adaptés à faire générer par le système à roues et par le système d'actionnement à action continue, des couples de la forme :

$$\left\{ \begin{array}{l} T_w = - \left( K_{mz} * H_{ym} * \Phi + \dfrac{H_{zm} - H_{zr}}{\omega_0} \right) * \sin\alpha_w * K_w \quad (9) \\[2ex] T_{zc} = \left( K_{mz} * \omega_0 * H_{ym} * \Phi + H_{zm} - H_{zr} \right) * \cos\alpha_w + T_w \quad (10) \\[2ex] H_{zr} = \int T_w * dt \qquad\qquad\qquad\qquad\qquad\qquad\qquad (11) \\[2ex] T_w \text{ étant choisi de façon que } |T_{zc}| < T_{disp} \end{array} \right.$$

où :

| | |
|---|---|
| $\alpha_w =$ | paramètre numérique compris entre 5° et 85° |
| $T_{disp} =$ | couple maximal que l'actionneur peut fournir autour de X |
| $T_{zc} =$ | couple de contrôle commandé à l'actionneur autour de X |
| $H_{ym}, H_{zm} =$ | composantes mesurées suivant axe Y et Z du moment cinétique des roues |
| $T_w =$ | couple commandé à la composante suivant Z du moment cinétique des roues |
| $\Phi =$ | angle de roulis mesuré |
| $\Psi =$ | angle de lacet mesuré |
| $\omega_0 =$ | vitesse angulaire locale de rotation orbitale |
| $TD_x, TD_z =$ | couples perturbateurs estimé autour de X et Z. |
| $K_{mz}, K_{wz} =$ | fonctions de transfert éventuellement réduites à des gains. |

**21.** Dispositif selon l'une quelconque des revendications 12 à 14, caractérisé en ce que la composante variable du moment cinétique a une direction variable dans le plan roulis/lacet.

**22.** Dispositif selon la revendication 21, caractérisé en ce que ce système à roues comporte une roue cinétique (19, RC) dont l'axe est monté sur double pivot (20).

**23.** Dispositif selon la revendication 21 ou la revendication 22, caractérisé en ce que la première direction fixe est parallèle à l'axe de lacet, et la seconde direction fixe est parallèle à l'axe de roulis, et en ce que ces premier et second signaux complémentaires de commande sont adaptés à faire générer par le système à roues et par le système d'actionnement à action continue, des couples de la forme :

$$\begin{cases} T_{wx} = \omega_0 * (K_{mx} * H_{ym} * \Psi + H_{zm}) + TD_x & (12) \\[2mm] T_{wz} = ( - \dfrac{TD_x}{\omega_0} - H_{zm} ) * K_{wz} & (13) \\[2mm] T_{zc} = \omega_0 * (K_{mz} * H_{ym} * \Phi + H_{xm}) - TD_z + T_{wz} & (14) \\[1mm] T_{wz} \text{ étant choisi de façon que } |T_{zc}| < T_{disp} \end{cases}$$

où :

| | |
|---|---|
| $T_{disp}$ = | couple maximal que l'actionneur peut fournir |
| $T_{zc}$ = | couple de contrôle commandé à l'actionneur |
| $H_{xm}, H_{ym}, H_{zm}$ = | composantes mesurées suivant X, Y et Z du moment cinétique des roues |
| $T_{wx}, T_{wz}$ = | couple commandé aux composantes suivant X et Y du moment cinétique des roues |
| $\Phi$ = | angle de roulis mesuré |
| $\Psi$ = | angle de lacet mesuré |
| $\omega_0$ = | vitesse angulaire locale de rotation orbitale |
| $TD_x, TD_z$ = | couples perturbateurs estimés autour de X et Z |
| $K_{mx}, K_{mz}, K_{wz}$ = | fonctions de tranfert éventuellement réduites à des gains. |

**24.** Dispositif selon l'une quelconque des revendications 12 à 23, caractérisé en ce que le système d'actionnement à action continue (BM) est magnétique interagissant avec le champ magnétique local.

**25.** Dispositif selon l'une quelconque des revendications 12 à 24, caractérisé en ce que le satellite est sur une orbite géosynchrone d'inclinaison inférieur à 10°.

**26.** Dispositif selon l'une quelconque des revendications 12 à 25, caractérisé en ce que cette orbite est géostationnaire.

**Claims**

**1.** Roll and yaw attitude control method for a satellite (1) stabilised about its roll axis (X-X), yaw axis (Z-Z) and pitch axis (Y-Y) and comprising a momentum wheel system (10-20; RC1, RC2; RR, RC) generating a continuous angular momentum substantially parallel to the pitch axis and having a variable component at least approximately parallel to the roll-yaw plane and a continuously acting actuator system (BM), in which method the roll and/or yaw attitude of the satellite is sensed (21), command signals are applied to the momentum wheel system that are produced by a fast control loop using a known fast control law (24) and second command signals are applied to the continuously acting actuator system that are produced by a slow control loop using a known slow control law (25), characterised in that the continuously acting actuator system (BM) is loaded in a fixed direction of the satellite (Z-Z) parallel to the variable component if the latter has a fixed direction, in that at least a first additional control signal ($T_w$) is applied to the momentum wheel system that is chosen to yield for a component of the angular momentum along said fixed direction a value adapted to compensate in the long term drift of a component of the angular momentum along a second fixed direction (X-X) and a second additional control signal is applied to the continuously acting actuator system that is adapted to cancel the effect of the first signal on the attitude with respect to the second fixed direction.

**2.** Method according to claim 1 characterised in that the first fixed direction (Z-Z) is parallel to the yaw axis and the second fixed direction (X-X) is parallel to the roll axis.

**3.** Method according to claim 1 or claim 2 characterised in that the first additional control signal is adapted to cause the momentum wheel system to generate a torque in the form:

$$T_w = (H_c - H_m) . K_w$$

EP 0 522 930 B1

where:

$H_m$ = instantaneous measured value of the yaw component,

$K_w$ = transfer function, possibly just a gain,

$H_c$ = set point value of the yaw component adapted to compensate in the long term drift in roll of the angular momentum, where

$$H_c = \frac{T_{xc}}{\omega_0}$$

where:

$T_{xc}$ = roll command torque produced by a conventional slow loop,

$\omega_0$ = local speed of orbital rotation.

4. Method according to any one of claims 1 to 3 characterised in that said variable component of the angular momentum is at all times parallel to said first fixed direction (Z-Z).

5. Method according to claim 4 characterised in that the first fixed direction is parallel to the yaw axis and the second fixed direction is parallel to the roll axis and in that said first and second additional control signals are adapted to cause the momentum wheel system and the continuously acting actuator system to generate torques in the form:

$$\left\{ \begin{array}{ll} T_w = (-H_{ym} * \Psi * K_{mx} - \dfrac{TD_x}{\omega_0} - H_{zm}) * K_w & (7) \\[2ex] T_{zc} = K_{mz} * \omega_0 * H_{ym} * \Phi - TD_z + T_w & (8) \\[2ex] T_w \text{ being chosen so that } |T_{zc}| < T_{avail} & \end{array} \right.$$

where:

$T_{avail}$ = maximum torque that the actuator can provide about the Z axis (assumed here to be the same in both directions),

$T_{zc}$ = Z axis actuator command torque,

$H_{ym}, H_{zm}$ = measured momentum wheel Y and Z axis angular momentum components,

$T_w$ = momentum wheel Z axis angular momentum component command torque,

$\Phi$ = measured roll angle,

$\Psi$ = measured yaw angle,

$\omega_0$ = local angular speed of orbital rotation,

$TD_x, TD_z$ = estimated disturbing torques about the X and Z axes,

$K_{mx}, K_{mz}, K_w$ = transfer functions, possibly just gains.

6. Method according to claim 4 characterised in that the first fixed direction is parallel to the yaw axis and the second fixed direction is parallel to the roll axis and in that said first and second additional control signals are adapted to cause the momentum wheel system and continuously acting actuator system to generate torques of the form:

$$\left\{ \begin{array}{ll} T_w = - (K_{mz} * H_{ym} * \Phi + \dfrac{H_{zm} - H_{zr}}{\omega_0}) * \sin\alpha_w * K_w & (9) \\[2ex] T_{zc} = (K_{mz} * \omega_0 * H_{ym} * \Phi + H_{zm} - H_{zr}) * \cos\alpha_w + T_w & (10) \\[2ex] H_{zr} = \int T_w * dt & (11) \\[2ex] T_w \text{ being chosen so that } |T_{zc}| < T_{avail} & \end{array} \right.$$

where:

$\alpha_w$ = numerical parameter between $5°$ and $85°$,

21

EP 0 522 930 B1

$T_{avail}$ = maximum torque that the actuator can generate about the X axis,

$T_{zc}$ = actuator command torque about the X axis,

$H_{ym}, H_{zm}$ = measured momentum wheel Y and Z axis angular momentum components,

$T_w$ = momentum wheel Z axis angular momentum component command torque,

$\Phi$ = measured roll angle,

$\Psi$ = measured yaw angle,

$\omega_0$ = local angular speed of orbital rotation,

$TD_x, TD_z$ = estimated disturbing torques about the X and Z axes,

$K_{mz}, K_{wz}$ = transfer functions, possibly just gains.

7. Method according to any one of claims 1 to 3 characterised in that the variable component of the angular momentum is variable in direction in the roll/yaw plane.

8. Method according to claim 7 characterised in that the first fixed direction is parallel to the yaw axis and the second fixed direction is parallel to the roll axis and in that said first and second additional control signals are adapted to cause the momentum wheel system and the continuously acting actuator system to generate torques of the form:

$$
\left\{
\begin{array}{ll}
T_{wx} = \omega_0 * (K_{mx} * H_{ym} * \Psi + H_{zm}) + TD_x & (12) \\[2mm]
T_{wz} = (-\dfrac{TD_x}{\omega_0} - H_{zm}) * K_{wz} & (13) \\[2mm]
T_{zc} = \omega_0 * (K_{mx} * H_{ym} * \Phi + H_{xm}) - TD_z + T_{wz} & (14) \\[2mm]
T_{wz} \text{ being chosen so that } |T_{zc}| < T_{avail}
\end{array}
\right.
$$

where:

$T_{avail}$ = maximum torque that the actuator can provide,

$T_{zc}$ = actuator command torque,

$H_{xm}, H_{ym}, H_{zm}$ = measured momentum wheel X, Y and Z axis angular momentum components,

$T_{wx}, T_{wz}$ = momentum wheel X and Z axis angular momentum component command torques,

$\Phi$ = measured roll angle,

$\Psi$ = measured yaw angle,

$\omega_0$ = local angular speed of orbital rotation,

$TD_x, TD_z$ = estimated disturbing torques about the X and Z axes,

$K_{mx}, K_{mz}, K_{wz}$ = transfer functions, possibly just gains.

9. Method according to any one of claims 1 to 8 characterised in that the continuously acting actuator system is a magnetic system interacting with the local magnetic field.

10. Method according to any one of claims 1 to 9 characterised in that the satellite is in a geosynchronous orbit inclined at less than 10°.

11. Method according to claim 10 characterised in that said orbit is a geostationary orbit.

12. Device for controlling the roll/yaw attitude of a satellite (1) stabilised about its roll axis (X-X), yaw axis (Z-Z) and pitch axis (Y-Y) and comprising a momentum wheel system (10-20; RC1, RC2; RR, RC) generating a continuous angular momentum substantially parallel to the pitch axis and having a variable component at least approximately parallel to the roll-yaw plane and a continuously acting actuator system (BM) comprising a set of sensors (21) for detecting the roll or yaw attitude of the satellite, first means (24) for applying to the momentum wheel system command signals produced by a fast control loop according to a known fast control law and means for applying to the continuously acting actuator system second command signals produced by a slow control loop using a known slow control law characterised in that said continuously acting actuator system is active in a fixed direction (Z-Z) of the satellite parallel to said variable component if the latter is fixed in direction, in that the slow control loop (25) is connected (D) to the momentum wheel system via the fast control loop and applies to said

22

momentum wheel system at least one additional command signal so that a component of the angular momentum along said fixed direction assumes a value adapted to compensate in the long term drift of a component of the angular momentum component along a second fixed direction (X-X) and in that said second means (25) applies to said continuously acting actuator system a second additional command signal adapted to cancel the effect of the first signal on the satellite with respect to said second fixed direction.

13. Device according to claim 12 characterised in that the first fixed direction (Z-Z) is parallel to the yaw axis and the second fixed direction (X-X) is parallel to the roll axis.

14. Device according to claim 12 or claim 13 characterised in that said first additional command signal is adapted to cause the momentum wheel system to generate a torque of the form:

$$T_w = (H_c - H_m) . K_w$$

where:

$H_m$ = instantaneous measured value of the yaw component,

$K_w$ = transfer function, possibly just a gain,

$H_c$ = set point value of the yaw component adapted to compensate in the long term drift in roll of the angular momentum, where

$$H_c = \frac{T_{xc}}{\omega_0}$$

where:

$T_{xc}$ = roll command torque produced by a conventional slow loop,

$\omega_0$ = local speed of orbital rotation.

15. Device according to any one of claims 12 to 14 characterised in that said variable component of the angular momentum is at all times exclusively parallel to said first fixed direction.

16. Device according to claim 15 characterised in that said momentum wheel system comprises an inertia wheel (10) whose axis is at least approximately parallel to the pitch axis and a reaction wheel (11) whose axis is parallel to said first fixed direction.

17. Device according to claim 15 characterised in that said momentum wheel system comprises two inertia wheels (12, 13; RC1, RC2) disposed in a V arrangement with their axes in the plane of the pitch axis and said first fixed direction at least approximately symmetrical relative to the pitch axis.

18. Device according to claim 15 characterised in that said momentum wheel system comprises an inertia wheel (14) mounted on a single pivot (15) whose axis is perpendicular to said first fixed direction.

19. Device according to claim 15 characterised in that the first fixed direction is parallel to the yaw axis and the second fixed direction is parallel to the roll axis and in that said first and second additional control signals are adapted to cause the momentum wheel system and the continuously acting actuator system to generate torques in the form:

$$\left\{ \begin{aligned} &T_w = (-H_{ym} * \Psi * K_{mx} - \frac{TD_x}{\omega_0} - H_{zm}) * K_w \qquad (7)\\ &T_{zc} = K_{mz} * \omega_0 * H_{ym} * \Phi - TD_z + T_w \qquad (8)\\ &T_w \text{ being chosen so that } |T_{zc}| < T_{avail} \end{aligned} \right.$$

where:

$T_{avail}$ = maximum torque that the actuator can provide about the Z axis (assumed here

23

to be the same in both directions),

$T_{zc}$ = Z axis actuator command torque,

$H_{ym}, H_{zm}$ = measured momentum wheel Y and Z axis angular momentum components,

$T_w$ = momentum wheel Z axis angular momentum component command torque,

$\Phi$ = measured roll angle,

$\Psi$ = measured yaw angle,

$\omega_0$ = local angular speed of orbital rotation,

$TD_x, TD_z$ = estimated disturbing torques about the X and Z axes,

$K_{mx}, K_{mz}, K_w$ = transfer functions, possibly just gains.

**20.** Device according to claim 15 characterised in that the first fixed direction is parallel to the yaw axis and the second fixed direction is parallel to the roll axis and in that said first and second additional control signals are adapted to cause the momentum wheel system and said continuously acting actuator system to generate torques of the form:

$$
\left\{
\begin{aligned}
T_w &= -(K_{mz} * H_{ym} * \Phi + \frac{H_{zm} - H_{zr}}{\omega_0}) * \sin\alpha_w * K_w && (9) \\
T_{zc} &= (K_{mz} * \omega_0 * H_{ym} * \Phi + H_{zm} - H_{zr}) * \cos\alpha_w + T_w && (10) \\
H_{zr} &= \int T_w * dt && (11) \\
T_w &\text{ being chosen so that } |T_{zc}| < T_{avail}
\end{aligned}
\right.
$$

where:

$\alpha_w$ = numerical parameter between 5° and 85°,

$T_{avail}$ = maximum torque that the actuator can generate about the X axis,

$T_{zc}$ = actuator command torque about the X axis,

$H_{ym}, H_{zm}$ = measured momentum wheel Y and Z axis angular momentum components,

$T_w$ = momentum wheel Z axis angular momentum component command torque,

$\Phi$ = measured roll angle,

$\Psi$ = measured yaw angle,

$\omega_0$ = local angular speed of orbital rotation,

$TD_x, TD_z$ = estimated disturbing torques about the X and Z axes,

$K_{mz}, K_{wz}$ = transfer functions, possibly just gains.

**21.** Device according to any one of claims 12 to 14 characterised in that the variable component of the angular momentum is variable in direction in the roll/yaw plane.

**22.** Device according to claim 21 characterised in that said momentum wheel system comprises an inertia wheel (19; RC) whose axis is mounted on a double pivot (20).

**23.** Device according to claim 21 or claim 22 characterised in that the first fixed direction is parallel to the yaw axis and the second fixed direction is parallel to the roll axis and in that said first and second additional control signals are adapted to cause the momentum wheel system and the continuously acting actuator system to generate torques of the form:

$$
\left\{
\begin{aligned}
T_{wx} &= \omega_0 * (K_{mx} * H_{ym} * \Psi + H_{zm}) + TD_x && (12) \\
T_{wz} &= (-\frac{TD_x}{\omega_0} - H_{zm}) * K_{wz} && (13) \\
T_{zc} &= \omega_0 * (K_{mx} * H_{ym} * \Phi + H_{xm}) - TD_z + T_{wz} && (14) \\
T_{wz} &\text{ being chosen so that } |T_{zc}| < T_{avail}
\end{aligned}
\right.
$$

where:

$T_{avail}$ = maximum torque that the actuator can provide,

24

$T_{zc}$ = actuator command torque,

$H_{xm}, H_{ym}, H_{zm}$ = measured momentum wheel X, Y and Z axis angular momentum components,

$T_{wx}, T_{wz}$ = momentum wheel X and Z axis angular momentum component command torques,

$\Phi$ = measured roll angle,

$\Psi$ = measured yaw angle,

$\omega_0$ = local angular speed of orbital rotation,

$TD_x, TD_z$ = estimated disturbing torques about the X and Z axes,

$K_{mx}, K_{mz}, K_{wz}$ = transfer functions, possibly just gains.

24. Device according to any one of claims 12 to 23 characterised in that the continuously acting actuator system (BM) is a magnetic system interacting with the local magnetic field.

25. Device according to any one of claims 12 to 24 characterised in that the satellite is in a geosynchronous orbit inclined at less than 10°.

26. Device according to any one of claims 12 to 25 characterised in that said orbit is a geostationary orbit.

**Patentansprüche**

1. Verfahren zur Steuerung der Lage bezüglich Roll- und Gierbewegungen eines Satelliten (1), der um seine Rollachse (X-X), Gierachse (Z-Z) und Nickachse (Y-Y) stabilisiert ist und ein Rädersystem (10-20; RC1, RC2; RR, RC), das ein zur Nickachse im wesentlichen paralleles, permanentes kinetisches Moment erzeugt, das eine zur Roll-Gier-Ebene mindestens annähernd parallele veränderliche Komponente hat, und ein Betätigungssystem mit kontinuierlicher Wirkung (BM) aufweist, gemäß welchem man die Lage des Satelliten bezüglich Roll- und/oder Gierbewegungen erfaßt (21), an das Rädersystem Steuersignale anlegt, die durch eine schnelle Regelungsschleife gemäß einer bekannten schnellen Regelungsgesetzmäßigkeit erarbeitet werden (24), und an das Betätigungssystem mit kontinuierlicher Wirkung zweite Steuersignale anlegt, die durch eine langsame Regelungsschleife gemäß einer bekannten langsamen Regelungsgesetzmäßigkeit erarbeitet werden (25), dadurch gekennzeichnet, daß dieses Betätigungssystem mit kontinuierlicher Wirkung (BM) in einer feststehenden Richtung des Satelliten (Z-Z) beansprucht wird, die zu dieser veränderlichen Komponente parallel ist, wenn diese von feststehender Richtung ist, daß man außerdem an das Rädersystem mindestens ein erstes ergänzendes Steuersignal ($T_w$) anlegt, das so gewählt ist, daß die Komponente des kinetischen Moments gemäß dieser feststehenden Richtung auf einen Wert zu gebracht wird, der geeignet ist, langfristig die Drift des kinetischen Moments gemäß einer zweiten feststehenden Richtung (X-X) zu kompensieren, und daß man an das Betätigungssystem mit kontinuierlicher Wirkung ein zweites ergänzendes Steuersignal anlegt, das so ausgelegt ist, daß es die Wirkung des ersten Signals auf die Lage gemäß dieser zweiten feststehenden Richtung aufhebt.

2. Verfahren nach Anspruch 1, dadurch gekennzeichnet, daß die erste feststehende Richtung (Z-Z) zur Gierachse und die zweite feststehende Richtung (X-X) zur Rollachse parallel ist.

3. Verfahren nach Anspruch 1 oder Anspruch 2, dadurch gekennzeichnet, daß dieses erste ergänzende Steuersignal so ausgelegt ist, daß es durch das Rädersystem ein Moment der folgenden Form erzeugen laßt:

$$T_w = (H_c - H_m) \bullet K_w$$

worin

$H_m$ der momentane gemessene Wert dieser Gierkomponente ist,

$K_w$ eine gegebenenfalls auf eine Verstärkung reduzierte Übertragungsfunktion ist,

$H_c$ der Sollwert der Gierkomponente ist, der geeignet ist, langfristig die Rolldrift des kinetischen Moments zu kompensieren, mit

$$H_c = \frac{T_{xc}}{\omega_0}$$

worin

$T_{xc}$ = durch eine gebräuchliche langsame Schleife bezüglich Rollbewegungen angefordertes Steuermoment

$\omega_0$ = örtliche Orbitaldrehwinkelgeschwindigkeit.

4. Verfahren nach einem der Ansprüche 1 bis 3, dadurch gekennzeichnet, daß diese veränderliche Komponente des kinetischen Moments zu dieser ersten feststehenden Richtung (Z-Z) ständig ausschließlich parallel ist.

5. Verfahren nach Anspruch 4, dadurch gekennzeichnet, daß die erste feststehende Richtung zur Gierachse und die zweite feststehende Richtung zur Rollachse parallel ist und daß dieses erste ergänzende Steuersignal und dieses zweite ergänzende Steuersignal so ausgelegt sind, daß sie durch das Rädersystem und durch das Betätigungssystem mit kontinuierlicher Wirkung Momente der folgenden Form erzeugen lassen:

$$\begin{cases} T_w = \left(-H_{ym} * \psi * K_{mx} - \dfrac{TD_x}{\omega_0} - H_{zm}\right) * K_w \qquad (7) \\[3em] T_{zc} = K_{mz} * \omega_0 * H_{ym} * \Phi - TD_z + T_w \qquad (8) \\[3em] \text{wobei } T_w \text{ so gewählt ist, daß } \left|T_{zc}\right| < T_{disp} \end{cases}$$

worin:

$T_{disp}$ = maximales Moment, das das Betätigungselement um Z liefern kann (dieser Wert wird hier als in den beiden Richtungen gleich angenommen)

$T_{zc}$ = dem Betätigungselement um Z auferlegtes Steuermoment

$H_{ym}, H_{zm}$ = gemessene Komponenten gemäß Y und Z des kinetischen Moments der Räder

$T_w$ = der Komponente gemäß Z des kinetischen Moments der Räder auferlegtes Moment

$\Phi$ = gemessener Rollwinkel

$\Psi$ = gemessener Gierwinkel

$\omega_0$ = örtliche Orbitaldrehwinkelgeschwindigkeit

$TD_x, TD_z$ = geschätzte Störmomente um X und Z

$K_{mx}, K_{mz}, K_w$ = gegebenenfalls auf Verstärkungen reduzierte Übertragungsfunktionen.

6. Verfahren nach Anspruch 4, dadurch gekennzeichnet, daß die erste feststehende Richtung zur Gierachse und die zweite feststehende Richtung zur Rollachse parallel ist und daß dieses erste ergänzende Steuersignal und dieses zweite ergänzende Steuersignal so ausgelegt sind, daß sie durch das Rädersystem und durch das Betätigungssystem mit kontinuierlicher Wirkung Momente der folgenden Form erzeugen lassen:

26

$$T_w = -\left(K_{mz} * H_{ym} * \Phi + \frac{H_{zm} - H_{zr}}{\omega_0}\right) * \sin \alpha_w * K_w \qquad (9)$$

$$T_{zc} = \left(K_{mz} * \omega_0 * H_{ym} * \Phi + H_{zm} - H_{zr}\right) * \cos \alpha_w + T_w \qquad (10)$$

$$H_{zr} = \int T_w * dt \qquad (11)$$

$$\text{wobei } T_w \text{ so gewählt ist, daß } \left| T_{zc} \right| < T_{disp}$$

worin:

| | |
|---|---|
| $\alpha_w$ = | numerischer Parameter zwischen 5° und 85° |
| $T_{disp}$ = | maximales Moment, das das Betätigungselement um X liefern kann |
| $T_{zc}$ = | dem Betätigungselement um X auferlegtes Steuermoment |
| $H_{ym}, H_{zm}$ = | gemessene Komponenten gemäß Achse Y und Z des kinetischen Moments der Räder |
| $T_w$ = | der Komponente gemäß Z des kinetischen Moments der Räder auferlegtes Moment |
| $\Phi$ = | gemessener Rollwinkel |
| $\Psi$ = | gemessener Gierwinkel |
| $\omega_0$ = | örtliche Orbitaldrehwinkelgeschwindigkeit |
| $TD_x, TD_z$ = | geschätzte Störmomente um X und Z |
| $K_{mz}, K_{wz}$ = | gegebenenfalls auf Verstärkungen reduzierte Übertragungsfunktionen. |

7. Verfahren nach einem der Ansprüche 1 bis 3, dadurch gekennzeichnet, daß die veränderliche Komponente des kinetischen Moments eine veränderliche Richtung in der Roll/Gier-Ebene hat.

8. Verfahren nach Anspruch 7, dadurch gekennzeichnet, daß die erste feststehende Richtung zur Gierachse und die zweite feststehende Richtung zur Rollachse parallel ist und daß dieses erste ergänzende Steuersignal und dieses zweite ergänzende Steuersignal so ausgelegt sind, daß sie durch das Rädersystem und durch das Betätigungssystem mit kontinuierlicher Wirkung Momente der folgenden Form erzeugen lassen:

$$T_{wx} = \omega_0 * \left(K_{mx} * H_{ym} * \Psi + H_{zm}\right) + TD_x \qquad (12)$$

$$T_{wz} = \left(-\frac{TD_x}{\omega_0} - H_{zm}\right) * K_{wz} \qquad (13)$$

$$T_{zc} = \omega_0 * \left(K_{mz} * H_{ym} * \Phi + H_{xm}\right) - TD_z + T_{wz} \qquad (14)$$

$$\text{wobei } T_{wz} \text{ so gewählt ist, daß } \left|T_{zc}\right| < T_{disp}$$

worin:

| | |
|---|---|
| $T_{disp}$ = | maximales Moment, das das Betätigungselement liefern kann |
| $T_{zc}$ = | dem Betätigungselement auferlegtes Steuermoment |
| $H_{xm}, H_{ym}, H_{zm}$ = | gemessene Komponenten gemäß X, Y und Z des kinetischen Moments der Räder |
| $T_{wx}, T_{wz}$ = | den Komponenten gemäß X und Z des kinetischen Moments der Räder auferlegtes Moment |
| $\Phi$ = | gemessener Rollwinkel |
| $\Psi$ = | gemessener Gierwinkel |
| $\omega_0$ = | örtliche Orbitaldrehwinkelgeschwindigkeit |
| $TD_x, TD_z$ = | geschätzte Störmomente um X und Z |
| $K_{mx}, K_{mz}, K_{wz}$ = | gegebenenfalls auf Verstärkungen reduzierte Übertragungsfunktionen. |

9. Verfahren nach einem der Ansprüche 1 bis 8, dadurch gekennzeichnet, daß das Betätigungssystem mit kontinuierlicher Wirkung magnetisch ist und mit dem örtlichen Magnetfeld wechselwirkt.

10. Verfahren nach einem der Ansprüche 1 bis 9, dadurch gekennzeichnet, daß der Satellit auf einem geosynchronen Orbit mit einer Neigung von weniger als 10° ist.

11. Verfahren nach Anspruch 10, dadurch gekennzeichnet, daß dieser Orbit geostationär ist.

12. Vorrichtung zur Steuerung der Lage bezüglich Roll- und Gierbewegungen eines Satelliten (1), der um seine Rollachse (X-X), Gierachse (Z-Z) und Nickachse (Y-Y) stabilisiert ist und ein Rädersystem (10-20; RC1, RC2; RR, RC), das ein zur Nickachse im wesentlichen paralleles, permanentes kinetisches Moment erzeugt, das eine zur Roll-Gier-Ebene mindestens annähernd parallele veränderliche Komponente hat, und ein Betätigungssystem mit kontinuierlicher Wirkung (BM) aufweist, aufweisend eine Gruppe von Detektoren (21) zum Erfassen der Lage des Satelliten bezüglich Roll- oder Gierbewegungen, erste Mittel (24), um an das Rädersystem Steuersignale anzulegen, die durch eine schnelle Regelungsschleife gemäß einer bekannten schnellen Regelungsgesetzmäßigkeit erarbeitet werden, und Mittel, um an das Betätigungssystem mit kontinuierlicher Wirkung zweite Steuersignale anzulegen, die durch eine langsame Regelungsschleife gemäß einer bekannten langsamen Regelungsgesetzmäßigkeit erarbeitet werden, dadurch gekennzeichnet, daß dieses Betätigungssystem mit kontinuierlicher Wirkung gemäß einer feststehenden Richtung (Z-Z) des Satelliten aktiv ist, die zu dieser veränderlichen Komponente parallel ist, wenn diese von feststehender Richtung ist, daß die langsame Regelungsschleife (25) mit der Rädergruppe über die schnelle Regelungsschleife verbunden ist (D) und an dieses Rädersystem mindestens ein ergänzendes Steuersignal anlegt, das so gewählt ist, daß die Komponente des kinetischen Moments gemäß dieser feststehenden Richtung auf einen Wert zu gebracht wird, der geeignet ist, langfristig die Drift des kinetischen Moments gemäß einer zweiten feststehenden Richtung (X-X) zu kompensieren, und daß diese zweiten Mittel (25) außerdem an das Betätigungssystem mit kontinuierlicher Wirkung ein zweites ergänzendes Steuersignal anlegen, das so ausgelegt ist, daß es die Wirkung des ersten Signals auf den Satelliten gemäß dieser zweiten feststehenden Richtung aufhebt.

13. Vorrichtung nach Anspruch 12, dadurch gekennzeichnet, daß die erste feststehende Richtung (Z-Z) zur Gierachse und die zweite feststehende Richtung (X-X) zur Rollachse parallel ist.

14. Vorrichtung nach Anspruch 12 oder Anspruch 13, dadurch gekennzeichnet, daß dieses erste ergänzende Steuersignal so ausgelegt ist, daß es durch das Rädersystem ein Moment der folgenden Form erzeugen läßt:

$$T_w = (H_c - H_m) \cdot K_w$$

worin

$H_m$      der momentane gemessene Wert dieser Gierkomponente ist,

$K_w$      eine gegebenenfalls auf eine Verstärkung reduzierte Übertragungsfunktion ist,

$H_c$      der Sollwert der Gierkomponente ist, der geeignet ist, langfristig die Rolldrift des kinetischen Moments zu kompensieren, mit

$$H_c = \frac{T_{xc}}{\omega_0}$$

worin

$T_{xc} =$      durch eine gebräuchliche langsame Schleife bezüglich Rollbewegungen angefordertes Steuermoment,

$\omega_0 =$      örtliche Orbitaldrehwinkelgeschwindigkeit.

15. Vorrichtung nach einem der Ansprüche 12 bis 14, dadurch gekennzeichnet, daß diese veränderliche Komponente des kinetischen Moments zu dieser ersten feststehenden Richtung ständig ausschließlich parallel ist.

16. Vorrichtung nach Anspruch 15, dadurch gekennzeichnet, daß dieses Rädersystem ein kinetisches Rad (10) mit zur Nickachse mindestens annähernd paralleler Achse und ein Reaktionsrad (11) mit zu dieser ersten feststehenden Richtung paralleler Achse aufweist.

17. Vorrichtung nach Anspruch 15, dadurch gekennzeichnet, daß dieses Rädersystem zwei in einem V angeordnete kinetische Räder (12, 13, RC1, RC2) mit Achsen aufweist, die in der Ebene der Nickachse und dieser ersten feststehenden Richtung mindestens annähernd symmetrisch bezüglich der Nickachse angeordnet sind.

18. Vorrichtung nach Anspruch 15, dadurch gekennzeichnet, daß dieses Rädersystem ein kinetisches Rad (14) aufweist, das auf einer einfachen Drehachse (15) mit zu dieser ersten feststehenden Richtung senkrechter Achse montiert ist.

19. Vorrichtung nach Anspruch 15, dadurch gekennzeichnet, daß die erste feststehende Richtung zur Gierachse und die zweite feststehende Richtung zur Rollachse parallel ist und daß dieses erste ergänzende Steuersignal und dieses zweite ergänzende Steuersignal so ausgelegt sind, daß sie durch das Rädersystem und durch das Betätigungssystem mit kontinuierlicher Wirkung Momente der folgenden Form erzeugen lassen:

$$T_w = \left(-H_{ym} * \Psi * K_{mx} - \frac{TD_x}{\omega_0} - H_{zm}\right) * K_w \qquad (7)$$

$$T_{zc} = K_{mz} * \omega_0 * H_{ym} * \Phi - TD_z + T_w \qquad (8)$$

$$\text{wobei } T_w \text{ so gewählt ist, daß } |T_{zc}| < T_{disp}$$

worin:

| | |
|---|---|
| $T_{disp}$ = | maximales Moment, das das Betätigungselement um Z liefern kann (dieser Wert wird hier als in den beiden Richtungen gleich angenommen) |
| $T_{zc}$ = | dem Betätigungselement um Z auferlegtes Steuermoment |
| $H_{ym}, H_{zm}$ = | gemessene Komponenten gemäß Y und Z des kinetischen Moments der Räder |
| $T_w$ = | der Komponente gemäß Z des kinetischen Moments der Räder auferlegtes Moment |
| $\Phi$ = | gemessener Rollwinkel |
| $\Psi$ = | gemessener Gierwinkel |
| $\omega_0$ = | örtliche Orbitaldrehwinkelgeschwindigkeit |
| $TD_x, TD_z$ = | geschätzte Störmomente um X und Z |
| $K_{mx}, K_{mz}, K_w$ = | gegebenenfalls auf Verstärkungen reduzierte Übertragungsfunktionen. |

20. Vorrichtung nach Anspruch 15, dadurch gekennzeichnet, daß die erste feststehende Richtung zur Gierachse und die zweite feststehende Richtung zur Rollachse parallel ist und daß dieses erste ergänzende Steuersignal und dieses zweite ergänzende Steuersignal so ausgelegt sind, daß sie durch das Rädersystem und durch das Betätigungssystem mit kontinuierlicher Wirkung Momente der folgenden Form erzeugen lassen:

$$T_w = -\left(K_{mz} * H_{ym} * \Phi + \frac{H_{zm} - H_{zr}}{\omega_0}\right) * \sin \alpha_w * K_w \qquad (9)$$

$$T_{zc} = \left(K_{mz} * \omega_0 * H_{ym} * \Phi + H_{zm} - H_{zr}\right) * \cos \alpha_w + T_w \qquad (10)$$

$$H_{zr} = \int T_w * dt \qquad (11)$$

$$\text{wobei } T_w \text{ so gewählt ist, daß } |T_{zc}| < T_{disp}$$

worin:

| | |
|---|---|
| $\alpha_w$ = | numerischer Parameter zwischen 5° und 85° |
| $T_{disp}$ = | maximales Moment, das das Betätigungselement um X liefern kann |
| $T_{zc}$ = | dem Betätigungselement um X auferlegtes Steuermoment |
| $H_{ym}, H_{zm}$ = | gemessene Komponenten gemäß Achse Y und Z des kinetischen Moments der Räder |

$T_w$ = der Komponente gemäß Z des kinetischen Moments der Räder auferlegtes Moment

$\Phi$ = gemessener Rollwinkel

$\Psi$ = gemessener Gierwinkel

$\omega_0$ = örtliche Orbitaldrehwinkelgeschwindigkeit

$TD_x, TD_z$ = geschätzte Störmomente um X und Z

$K_{mx}, K_{wz}$ = gegebenenfalls auf Verstärkungen reduzierte Übertragungsfunktionen.

21. Vorrichtung nach einem der Ansprüche 12 bis 14, dadurch gekennzeichnet, daß die veränderliche Komponente des kinetischen Moments eine veränderliche Richtung in der Roll/Gier-Ebene hat.

22. Vorrichtung nach Anspruch 21, dadurch gekennzeichnet, daß dieses Rädersystem ein kinetisches Rad (19, RC) aufweist, dessen Achse auf einer Doppel-Drehachse (20) montiert ist.

23. Vorrichtung nach Anspruch 21 oder Anspruch 22, dadurch gekennzeichnet, daß die erste feststehende Richtung zur Gierachse und die zweite feststehende Richtung zur Rollachse parallel ist und daß dieses erste ergänzende Steuersignal und dieses zweite ergänzende Steuersignal so ausgelegt sind, daß sie durch das Rädersystem und durch das Betätigungssystem mit kontinuierlicher Wirkung Momente der folgenden Form erzeugen lassen:

$$T_{wx} = \omega_0 \ast (K_{mx} \ast H_{ym} \ast \Psi + H_{zm}) + TD_x \qquad (12)$$

$$T_{wz} = \left(-\frac{TD_x}{\omega_0} - H_{zm}\right) \ast K_{wz} \qquad (13)$$

$$T_{zc} = \omega_0 \ast (K_{mz} \ast H_{ym} \ast \Phi + H_{xm}) - TD_z + T_{wz} \qquad (14)$$

$$\text{wobei } T_{wz} \text{ so gewählt ist, daß } |T_{zc}| < T_{disp}$$

worin:

$T_{disp}$ = maximales Moment, das das Betätigungselement liefern kann

$T_{zc}$ = dem Betätigungselement auferlegtes Steuermoment

$H_{xm}, H_{ym}, H_{zm}$ = gemessene Komponenten gemäß X, Y und Z des kinetischen Moments der Räder

$T_{wx}, T_{wz}$ = den Komponenten gemäß X und Z des kinetischen Moments der Räder auferlegtes Moment

$\Phi$ = gemessener Rollwinkel

$\Psi$ = gemessener Gierwinkel

$\omega_0$ = örtliche Orbitaldrehwinkelgeschwindigkeit

$TD_x, TD_z$ = geschätzte Störmomente um X und Z

$K_{mx}, K_{mz}, K_{wz}$ = gegebenenfalls auf Verstärkungen reduzierte Übertragungsfunktionen.

24. Vorrichtung nach einem der Ansprüche 12 bis 23, dadurch gekennzeichnet, daß das Betätigungssystem mit kontinuierlicher Wirkung (BM) magnetisch ist und mit dem örtlichen Magnetfeld wechselwirkt.

25. Vorrichtung nach einem der Ansprüche 12 bis 24, dadurch gekennzeichnet, daß der Satellit auf einem geosynchronen Orbit mit einer Neigung von weniger als 10° ist.

26. Vorrichtung nach einem der Ansprüche 12 bis 25, dadurch gekennzeichnet, daß dieser Orbit geostationär ist.

Fig.1

EP 0 522 930 B1

Fig. 2

Fig. 3

Fig. 5

Fig.4

Fig.6

Fig.7

EP 0 522 930 B1

COUPLE COMMANDE
EN LACET

BOUCLE LENTE
CLASSIQUE

MESURES

COUPLE COMMANDE
EN ROULIS

ACTIONNEURS EN
ROULIS ET LACET

COUPLE REALISE
EN LACET

COUPLE REALISE
EN ROULIS

BOUCLE LENTE CLASSIQUE

Fig.7A

AUTRES ENTREES
DE LA BOUCLE RAPIDE

MESURES

BOUCLE
LENTE
CLASSIQUE

COUPLE
COMMANDE
EN LACET

$X \dfrac{1}{\omega_0}$

MOMENT
CINETIQUE
COMMANDE
EN LACET

BOUCLE
D'ASSERVISSEMENT
DU MOMENT
CINETIQUE EN LACET

COUPLE COMMANDE
AU MOMENT
CINETIQUE EN LACET

BOUCLE RAPIDE

COUPLE COMMANDE
EN LACET

+

COUPLE
COMMANDE
EN LACET

ACTIONNEUR EN
LACET

COUPLE REALISE
EN LACET

BOUCLE LENTE SELON L'INVENTION

Fig.7B

Fig.8

Fig.9

Fig.10

EP 0 522 930 B1

Fig.11

EP 0 522 930 B1

Fig.12

POLAIRE

Fig.13